# EUROPÄISCHE PATENTSCHRIFT

(11) **EP 4 107 103 B1**
(45) Veröffentlichungstag und Bekanntmachung des Hinweises auf die Patenterteilung: **01.01.2025**
(21) Anmeldenummer: 22721699.1
(22) Anmeldetag: 08.04.2022
(51) Int. Cl.: B65H 3/08, B25J 15/06, B65B 43/18, B25J 9/00, B25J 9/04

(54) **ZUSCHNITT-VEREINZELER, VERPACKUNSMASCHINE, UND VERFAHREN ZUM ERZEUGEN VEREINZELTER ZUSCHNITTE AUS EINEM STAPEL**
BLANK SEPARATING DEVICE, PACKAGING MACHINE, AND METHOD FOR PRODUCING SEPARATED BLANKS FROM A STACK
SÉPARATEUR DE DÉCOUPES, MACHINE D'EMBALLAGE, ET PROCÉDÉ DE RÉALISATION DE DÉCOUPES INDIVIDUALISÉES À PARTIR D'UNE PILE

(30) Priorität: 09.04.2021 DE 102021108898; 09.06.2021 DE 102021114889
(43) Veröffentlichungstag der Anmeldung: 28.12.2022
(73) Patentinhaber: Gerhard Schubert GmbH, 74564 Crailsheim (DE)
(72) Erfinder: MAYER, Steffen, 74564 Crailsheim (DE); YANGUI, Oussama, 74564 Crailsheim (DE)
(74) Vertreter: Weickmann & Weickmann PartmbB
(86) Internationale Anmeldenummer: PCT/EP2022/059346
(87) Internationale Veröffentlichungsnummer: WO 2022/214633

(56) Entgegenhaltungen:
- EP-A1- 0 334 707
- EP-A1- 0 581 188
- EP-A2- 2 476 637
- CA-A1- 2 687 847
- DE-A1- 10 147 360
- DE-A1- 102012 218 990
- DE-A1- 102018 006 600
- DE-A1- 4 001 053
- DE-U1- 202018 105 228

## Beschreibung

### I. Anwendungsgebiet

Die Erfindung betrifft das Vereinzeln von flachen Zuschnitten, insbesondere als Verpackungsmaterial, vorzugsweise aus eigensteifem Material, insbesondere Karton-Material.

### II. Technischer Hintergrund

Umverpackungen aus Karton werden aus vorgefertigten, ebenen Zuschnitten erstellt durch sogenanntes Aufrichten, also Hochklappen der z.B. Seitenwand-Abschnitte gegenüber dem Boden-Abschnitt des Zuschnittes, und Fixieren der einzelnen Abschnitte, insbesondere der hochgeklappten Seitenwand-Abschnitte, des dreidimensional verformten Zuschnittes gegeneinander etwa durch Verkleben, wodurch ein - für das Befüllen - meist oben noch offener Karton oder eine Schachtel entsteht.

Während Zuschnitte aus Folie oder dünnem Papier unmittelbar vor dem Aufrichten meist erst in der Verpackungslinie durch Schneiden von einem bahnförmigen Ausgangsmaterial hergestellt werden, ist dies bei Karton-Zuschnitten kaum möglich.

Stattdessen werden die einzelnen Zuschnitte, die also später jeweils einen Karton ergeben, in einem Karton-Magazin gestapelt bevorratet, von dort von z.B. von einem Roboter entnommen, dann zum Beispiel durch ein Falt-Werkzeug, den sogenannten Aufrichter, geführt, um in die geforderte Form aufgerichtet zu werden, und danach auf einem Transportelement der Verpackungsmaschine aufgelegt.

Dabei werden die Zuschnitte extern vom Lieferanten der Zuschnitte aus großformatigen Bögen, deren Fläche einem Vielfachen der Fläche eines Zuschnittes entspricht, hergestellt durch Ausstanzen oder Ausschneiden und - meist noch vom Lieferanten - vereinzelt, wobei sowohl der Innen-Abfall - also Stanzbogen-Teile, die zunächst noch ein umschlossenes Loch im Zuschnitt ausgefüllt haben, welches aber für das Herstellen des Kartons aus dem Zuschnitt frei sein muss - entfernt, als auch der Außen-Abfall zwischen den einzelnen Zuschnitten und um die, meist zusammenhängenden, Zuschnitte herum, der oft in Form eines sogenannten Stanzgitters vorliegt.

Die einzelnen Zuschnitte werden natürlich innerhalb des Bogens so angeordnet, dass ein möglichst geringer Verschnitt, also Abfall, anfällt.

Da die Kapazität eines solchen Zuschnitt-Magazins jedoch begrenzt ist, muss von einem Bediener das Zuschnitt-Magazin regelmäßig nachgefüllt werden oder ein leeres Zuschnitt-Magazin gegen ein volles Zuschnitt-Magazin getauscht werden und nach dem Tausch das leere Zuschnitt-Magazin von ihm wieder manuell nachgefüllt werden.

Zusätzlich müssen bei einem neuen Verpackungsauftrag für das Handhaben eines anders gestalteten Zuschnittes für einen anders gestalteten Karton die Führungen und Auflagen des Zuschnitt-Magazins jeweils an den neuen Zuschnitt angepasst, also mechanisch umgebaut, werden, was zusätzlichen manuellen Aufwand erfordert.

Die DE 10 2018 006 600 A1, DE 101 47 360 A1 und DE 40 01 053 A1 betreffen Vereinzelungen von Bögen und/oder Bogen-Zuführungen, die DE 10 2012 218 990 A1 betrifft eine Verpackungsmaschine, die vereinzelte Bögen verarbeitet.

### III. Darstellung der Erfindung

### a) Technische Aufgabe

Es ist daher die Aufgabe gemäß der Erfindung, ein Verfahren sowie einen Zuschnitt-Vereinzeler zum Vereinzeln von flachen Zuschnitten auch aus biegesteifem, dickerem Material, insbesondere bis zu 5 mm Dicke, insbesondere Karton-Material, zur Verfügung zu stellen, bei dem der manuelle Aufwand für das Nachfüllen eines Magazins mit vereinzelten Zuschnitten möglichst vermieden wird.

### b) Lösung der Aufgabe

Diese Aufgabe wird durch die Merkmale der Ansprüche 1, 11 und 13 gelöst. Vorteilhafte Ausführungsformen ergeben sich aus den Unteransprüchen.

### Zunächst sollen einige Begriffe definiert werden:

Unter einem Zuschnitt wird im Rahmen der vorliegenden Beschreibung ein Bogen in Form eines formhaltigen, plattenförmigen Teils, meist bestehend aus Kartonmaterial, verstanden, welcher durch Umbiegen von Abschnitten entlang von meist vorgeformten Biegelinien zu einer dreidimensionalen Verpackung, meist einer dreidimensionalen Schachtel oder Kiste - mit oder ohne Deckel -, umgeformt werden kann.

Unter einer Gruppe von Zuschnitten, die der Roboter auf einmal aus dem Stanzbogen entnimmt, wird eine Untergruppe des gesamten Stanz-Bogens verstanden, sodass diese Gruppe weniger Zuschnitte enthält als der gesamte Stanzbogen.

Innerhalb der Gruppe kann es sich um benachbarte, noch über Mikro-Verbindungen verbundene, Zuschnitte handeln oder um innerhalb des Stanzbogens voneinander entfernte Zuschnitte.

Unter einem Stanz-Bogen werden im Rahmen der vorliegenden Beschreibung die in einer Ebene noch zusammenhängenden, aus einem Bogen ausgestanzten, Zuschnitte mit Soll-Reißstellen - den Mikroverbindungen, ggfs. Haltepunkte genannt - dazwischen verstanden, wobei jedoch der für die Zuschnitte nicht benötigte Abfall, insbesondere das Stanzgitter um die Zuschnitte herum, bereits aus dem ursprünglichen Bogen entfernt ist.

Die Mikroverbindungen sind beim Ausstanzen belassene schmale Brücken zwischen den Zuschnitten, die natürlich ebenfalls aus dem Material des Stanz-Bogens bestehen.

Deshalb wird im Rahmen der nachfolgenden Beschreibung nur noch von Mikroverbindungen gesprochen, worunter jedoch alle Arten von Soll-Reissstellen verstanden werden sollen, selbst wenn sie nicht aus einzelnen, nebeneinanderliegenden Mikroverbindungen bestehen, sondern zum Beispiel aus einem durchgehenden, aber sehr dünnen Verbindungsstreifen zwischen den Zuschnitten bestehen.

Unter einem Oberseiten-Greifer wird jede Art von Greifer verstanden, der zum Ergreifen lediglich die Oberseite des Produktes benötigt, nicht die Seitenflächen oder gar die Unterseite des Produktes. Ein Oberseiten-Greifer greift am Produkt also nur an dessen Oberseite an. Dabei kann es sich um mittels Adhäsionskräften funktionierenden Adhäsion-Greifer handeln oder um die weitverbreiteten, mittels Saugluft beaufschlagten, Sauger. Um Beschreibung und Ansprüche zu vereinfachen, ist dort überwiegend nur von Saugern die Rede, was alle Arten von Oberseiten-Greifern mit einschließen soll.

Hinsichtlich des Stapels von Stanzbögen soll klargestellt werden, dass die Stanzbögen zwar im Prinzip eine über ihre gesamte Erstreckung gleichbleibenden Dicke aufweisen, aber dennoch insbesondere durch die große Anzahl in einem Stapel z.B. Setzungserscheinungen auftreten können, die bewirken, dass die Oberseite des obersten Stanzbogens nicht exakt eben ist, sondern etwas durchhängt oder auch in der Mitte etwas aufgewölbt sein kann.

Wenn von einer Greif-Ebene oder Stanzbogen-Ebene die Rede ist, in der die mehreren Oberseiten-Greifer des Greifwerkzeuges angeordnet sind oder der oberste Stanzbogen liegt, so muss das Greif-Werkzeug diese Unebenheit bewältigen können, und ebenso der oder die Niederhalter.

Hinsichtlich des Vereinzelungs-Verfahrens von flachen Zuschnitten aus einem Stanz-Bogen mit mehreren darin enthaltenen, in einer Ebene liegenden und miteinander über Soll-Reissstellen, insbesondere Mikroverbindungen, verbundenen Zuschnitten wird die Aufgabe dadurch gelöst, dass aus dem 1. Stanz-Bogen des Stapels, bei einem senkrechten Stapel also dem obersten Stanz-Bogen, ein, insbesondere nur ein einzelner, Zuschnitt ergriffen und aus diesem Stanz-Bogen quer zu dessen Bogen-Ebene heraus bewegt wird, wobei dann die Soll-Reissstellen zu den benachbarten Zuschnitten abreißen.

Hierfür muss der betreffende Zuschnitt natürlich mit einer ausreichenden Kraft festgehalten werden.

Dennoch wird der betreffende Zuschnitt hierfür meist nicht formschlüssig, also nicht mittels mechanischer Greifer, ergriffen und gehalten, sondern vorzugsweise kraftschlüssig, insbesondere mittels einem oder mehreren Saugern, die auf der Oberseite des betreffenden Zuschnittes angreifen.

Ein solches, ein oder mehrere Sauger umfassendes Greifwerkzeug kann beispielsweise an einem Roboterarm eines Roboters befestigt sein.

Das Abreissen gegenüber den umgebenden Zuschnitten wird in der Regel nur funktionieren, wenn diese - vorzugsweise möglichst eng in der Umgebung um den zu vereinzelnden Zuschnitt - festgehalten werden, insbesondere bei gestapelten Stanzbögen gegen ein Abheben nach oben gesichert sind, also durch einen zum Beispiel Niederhalter auf der Oberseite des restlichen Stapels gehalten werden.

Um ein sauberes Abreissen an den Soll-Reissstellen, und nicht abseits davon, zu bewirken, sollten die Haltebereiche, in denen der Zuschnitt an einem Greifwerkzeug, insbesondere Sauger, gehalten wird, möglichst nahe an den Soll-Reissstellen liegend und ebenso die Niederhalter.

Ferner kann es vorteilhaft sein, den Zuschnitt nicht lotrecht zur Stanzbogen-Ebene aus diesem heraus zu bewegen, da hierbei alle Soll-Reissstellen gleichzeitig abgerissen werden müssen, sondern den zu vereinzelnden Zuschnitt zunächst in einem seiner Endbereiche aus der Stanzbogen-Ebene heraus zu bewegen, insbesondere also vom Stapel anzuheben, und von dort aus fortlaufend zum anderen Endbereich, sodass die einzelnen Soll-Reissstellen entlang der Umfangskanten des Zuschnittes möglichst nacheinander abreissen, wofür nur eine relativ geringe Haltekraft des wenigstens einen Saugers benötigt wird.

Das Erzeugen vereinzelter Zuschnitte kann Vor-Bearbeitungsschritte umfassen, beispielsweise das Bedrucken vor oder nach dem Stanzen des Stanz-Bogens aus dem Bogen Zuschnitte umfassen, vorzugsweise im Zustand des noch ganzen Bogens.

Weitere Vor-Bearbeitungsschritte können das Anfertigen von Falzlinien in den Zuschnitten sein, um welche die einzelnen Teile des Zuschnittes gegeneinander gefaltet werden sollen.

Vor allem jedoch ist das Entfernen von Abfall aus dem Nutzen notwendig, denn die Stanz-Bögen sollen in den meisten Fällen außer den zusammenhängenden Zuschnitten nach Möglichkeit kein Abfallmaterial mehr enthalten. Vorzugsweise umfasst ein Stanz-Bogen nicht nur einen Teil der in einem Bogen hergestellten Zuschnitte, sondern alle Zuschnitte aus einem Bogen, was die Erstellung des Stanz-Bogens erleichtert.

Die Stanz-Bögen werden ohnehin vom Hersteller möglichst groß hergestellt, da dies den Aufwand für Bedrucken und Stanzen niedrig hält. Vorzugsweise werden für die Bögen dabei genormte Größen, beispielsweise 0b oder 3b, gewählt.

Vorzugsweise wird dabei eine solche Größe des Bogens gewählt, dass die daraus hergestellten Stanz-Bögen gerade noch auf eine genormte Palette, insbesondere eine Euro-Palette, passen, und als Stanz-Bogen-Vorrat die mit einem Stapel aus Stanz-Bögen gefüllte Euro-Palette in oder an den Zuschnitten-Vereinzeler herangefahren und dort abgestellt werden kann.

Vorzugsweise kann der Stapel entsprechend der abnehmenden Stapel-Höhe beim Vereinzeln der Zuschnitte in der Höhe so nachgeführt werden, dass sich der oberste Stanzbogen immer in etwa auf der gleichen Höhe befindet.

Vorzugsweise wird der vereinzelte Zuschnitt auf Qualitätsmerkmale, insbesondere hinsichtlich Form und/oder Größe und/oder Qualität der abgerissenen Umfangskanten und/oder Qualität seiner Bedruckung überprüft, was vorzugsweise vor dem Einbringen des vereinzelten Zuschnitts in ein Zuschnitt-Magazin oder in den Verarbeitungsablauf einer nachgeschalteten Maschine erfolgt.

Vorzugsweise sollte der herausgetrennte Zuschnitt nach dem Heraustrennen in einer vorgegebenen Soll-Position am Greifwerkzeug, etwa dem Roboter, hängen.

Hierfür ist zumindest die Kenntnis der ist-Lage des Zuschnitts und damit des gesamten Stanz-Bogens vor dem Ergreifen und Heraustrennen notwendig, wofür dessen Ist-Lage ermittelt werden sollte und über die Steuerung dem Greifwerkzeug mitgeteilt werden sollte für ein korrektes Ergreifen durch das Greifwerkzeug. Besser sollte der gesamte Stanz-Bogen vor dem Ergreifen und Heraustrennen des ersten und jeden weiteren Zuschnittes in eine vorgegebenen Soll-Position gebracht werden.

Da dennoch beim Herausreissen die vereinzelten Zuschnitte nach dem Trennvorgang nicht immer die exakt gleiche Position, insbesondere auch nicht am Greifwerkzeug, einnehmen, da der Abreissvorgang nicht 100-prozentig exakt reproduzierbar ist, kann eine Lagekorrektur des einzelnen Zuschnittes sinnvoll sein:
Beispielsweise wird hierbei zunächst die Ist-Position des auf seiner Auflagefläche, etwa einem Förderband, abgelegten Zuschnitts ermittelt und anschließend korrigiert, beispielsweise mithilfe eines angreifenden Werkzeuges oder im Rahmen eines anschließenden Umsetzvorganges des einzelnen Zuschnittes, etwa auf dem Zuförderer zu einem Karton-Aufrichter.

Wenn erfahrungsgemäß die Abweichungen der Ist-Position von der Soll-Position gering ist, kann unter Umständen auch auf das Ermitteln der Ist-Position verzichtet werden, und dennoch zuverlässig die Soll-Position erreicht werden, beispielsweise indem der Zuschnitt, insbesondere beim Weitertransport auf einem Förderer, mittels mechanischen Leitvorrichtungen wie Leitblechen ausgerichtet und gegebenenfalls zusätzlich über einen Längsanschlag auch in Längsrichtung positioniert wird.

Sofern das Vereinzeln der Zuschnitte im Rahmen des Betriebs einer Verpackungsmaschine durchgeführt wird, zu dem auch das Herstellen von Kartons aus Zuschnitten gehört, so wird der jeweilige vereinzelte Zuschnitt vorzugsweise sofort weiterverarbeitet.

Wahlweise wird dennoch ein Vorrat aus bereits vereinzelten Zuschnitten vorgehalten, aus dem die Verpackungsmaschine gespeist werden kann, falls der Vereinzelungs-Vorgang aus den Stanz-Bögen unterbrochen ist, beispielsweise, weil ein neuer Stapel von Stanz-Bögen in die Vorrats-Station eingesetzt werden muss.

Bevorzugt wird ein Stapel aus Stanz-Bögen in die Vorrats-Station hierfür zusammen mit dem Anlieferung-Gebinde eingestellt. In der Regel werden die Stanzbögen gestapelt und fixiert auf einer Euro-Palette angeliefert, sodass die gesamte beladene Palette in die Vorrats-Station mit einem Hubstapler eingestellt werden kann, und lediglich die Befestigung, etwa die Spanngurte, von dem Stapel gelöst werden müssen.

Hinsichtlich des Zuschnitt-Vereinzelers umfasst dieser zum einen eine Vorrats-Station für die Aufnahme eines - vorzugsweise vertikalen - Stapels von plattenförmigen Stanz-Bögen, sowie einen Trenn-Roboter zum Umsetzen eines, insbesondere nur eines, Zuschnittes aus dem vorzugsweise vordersten bzw. obersten Stanzbogen des Stapels in der Vorrats-Station auf ein nachgelagertes Transportsystem einer nachgelagerten Maschine oder in ein Zuschnitt-Magazin. Ferner ist eine Steuerung zur Steuerung der beweglichen Teile des Vereinzelers vorhanden

Erfindungsgemäß werden also in der Vorrats-Station keine vereinzelten Zuschnitte gestapelt vorgehalten, sondern ganze Stanzbögen mit jeweils mehreren in einer Ebene liegenden und noch über Soll-Reissstellen, insbesondere Micro-Verbindungen. miteinander verbundenen Zuschnitten, bei denen jedoch vorzugsweise die Abfälle zwischen den Zuschnitten, sei es das umgebende Stanzgitter oder auch Innenabfall im Inneren eines Zuschnittes, bereits aus den gestapelten Stanzbögen entfernt sind.

Der Trenn-Roboter - wobei darunter jede Art von Handhabungsvorrichtung zu verstehen ist - und insbesondere das an ihm befestigte Greifwerkzeug ist als Trenn-Roboter ausgebildet, sodass er in der Lage ist, entweder einen einzigen Zuschnitt oder eine Gruppe von - miteinander verbundenen oder im Stanzbogen zueinander beanstandeten - Zuschnitten aus dem obersten Stanzbogen des Stapels zunächst zu Ergreifen und durch Herausbewegen aus der Stanzbogen-Ebene von den benachbarten Zuschnitten zu trennen unter Abreißen der Soll-Reissstellen.

Dies wird nacheinander für alle Zuschnitte des obersten Stanzbogens und danach für alle weiteren Stanzbögen durchgeführt, bis der letzte Zuschnitt übrigbleibt, der dann nicht mehr von benachbarten Zuschnitten abgerissen werden muss, sondern lediglich ergriffen und abtransportiert werden muss.

In der Regel besitzt der Trenn-Roboter nur einen relativ begrenzten Arbeitsbereich in Höhenrichtung, jedenfalls geringer als die Höhe eines vollen Stapels.

Eine Möglichkeit besteht darin, dass der Trenn-Roboter so ausgestattet oder umgerüstet sein, dass er in Höhenrichtung einen Arbeitsbereich entsprechend der Höhe eines vollen Stapels besitzt entweder wird zu diesem Zweck der Trenn-Roboter im Ganzen, also einschließlich seiner Roboter-Basis, in der Höhe nachgeführt oder die gesamte Roboter-Mechanik, insbesondere der Roboter-Arm, ist so dimensioniert, dass er diesen vertikalen Arbeitsbereich bewältigen kann.

Bei einem seriellen Roboterarm, bei dem Oberarm und Unterarm des Roboterarmes in einer horizontalen Ebene verschwenkbar sind, könnte dann die am freien Ende des Unterarmes befestigte vertikalstrebe die an ihrem unteren Ende das Werkzeug trägt, eine entsprechende Länge besitzen.

Eine andere Möglichkeit besteht darin, dass eine Hubvorrichtung vorhanden ist, die den gesamten Stapel, vorzugsweise einschließlich des Gebindes, etwa der Palette, auf der er ruht, von unten nach oben entsprechend der abnehmenden Stapelhöhe nachführt, sodass sich der oberste Stanzbogen immer etwa auf der gleichen Höhe befindet. Vorzugsweise ist diese Hubvorrichtung am Grundgestell der Vorrats-Station befestigt.

Das Roboter-Werkzeug kann einen mechanischen Greifer aufweisen, wobei der Zugriff auf einen einzelnen Zuschnitt an mehreren einander gegenüberliegenden Seiten schwierig bis unmöglich sein kann, da dieser mit benachbarten Zuschnitten noch über die Soll-Reißstellen verbunden ist.

Deshalb umfasst das Roboter-Werkzeug vorzugsweise einen oder mehrere, dann vorzugsweise in einer horizontalen Greifer-Ebene angeordnete, Oberseiten-Greifer, beispielsweise Sauger - im Folgenden ist nur noch von Saugern die Rede, was alle Arten von Oberseiten-Greifern mit beinhalten soll -, die auf die Oberseite des zu vereinzelnden Zuschnittes aufgesetzt werden können und diesen so festhalten, dass damit auch ein Herausreissen aus dem Rest des Stanzbogens möglich ist.

Um das Werkzeug auf unterschiedlich große und unterschiedlich gestaltete Zuschnitte einstellen zu können, ist die Position der Sauger - in der Aufsicht betrachtet - am Werkzeug-Grundkörper vorzugsweise verstellbar, insbesondere gegenüber dessen mittleren Bereich radial verstellbar, vorzugsweise gesteuert und automatisch verstellbar.

Eine erste Lösung kann darin bestehen, dass jeder Sauger an einem bzgl. des Werkzeug-Grundkörpers und dessen mittleren, zentralen Bereich radial verlaufenden Sauger-Arm befestigt ist und entweder in seiner Position entlang des Sauger-Armes verstellbar ist oder am Ende des Saug-Armes angeordnet ist und der Sauger-Arm selbst längenverstellbar ist.

Auch die Auskragrichtung der Sauger-Arme bzgl. des Werkzeug-Grundkörpers kann variabel sein durch Verschwenken um eine insbesondere aufrechte Achse.

Alternativ kann jeder Sauger in oder entlang einer bzgl. des zentralen mittleren Bereichs des Werkzeug-Grundkörpers vorzugsweise radial verlaufenden, daran ausgebildeten Sauger-Führung verstellbar befestigt sein.

Eine alternative Lösung besteht darin, dass der Werkzeug-Grundkörper eine Sauger-Tragplatte umfasst mit einer Vielzahl von Befestigungsvorrichtungen für Sauger, beispielsweise indem die Sauger-Tragplatte eine Lochplatte ist mit sehr vielen, in einem zweidimensionalen Raster angeordneten, Durchgangsöffnungen, in die jeweils mit sehr geringem Arbeitsaufwand ein Sauger eingesteckt und verrastet werden kann, und auf diese Art und Weise die Positionen der Sauger an die Größe und Form des Zuschnittes angepasst werden können.

Denn das Abreißen an den Soll-Reissstellen wird umso besser funktionieren, je näher die einzelnen Sauger an den Soll-Reißstellen positioniert sind und auch je näher die Niederhalter an den Soll-Reissstellen positioniert sind.

In einer weiteren Ausführungsform kann der Roboter oder das Werkzeug auch so ausgebildet sein, dass - insbesondere nach dem Aktivieren der Sauger und damit dem Ergreifen des Zuschnitts - die Sauger-Ebene in eine Schrägstellung zur Oberseite des Stapels, insbesondere zur Horizontalen, verstellt werden kann, und dadurch der herauszulösende Zuschnitt an einem Endbereich beginnend und sich zum anderen Endbereich hin fortsetzend herausgelöst werden kann, bei einem rechteckigen Zuschnitt vorzugsweise diagonal von einer Ecke des Zuschnitts zur gegenüberliegenden Ecke.

Das Roboter-Werkzeug kann auch so ausgebildet sein, dass bei mehreren Saugern die einzelnen Sauger gesteuert in einer bestimmten Reihenfolge aktivierbar sind, sei es einzeln oder in Gruppen.

Denn ein Sauger muss zum Ansaugen an einer Oberfläche, hier der Oberseite des Zuschnitts, diese noch nicht kontaktieren, sondern das Ansaugen funktioniert auch, wenn sich der Sauger mit seiner Sauger-Ebene, also seiner Öffnungs-Ebene, die von der Sauger-Lippe definiert wird, noch 1 - 2 mm entfernt ist.

Da die Verlagerung um eine solche Strecke quer zur Stanzbogen-Ebene zum Teil bereits genügt, damit die in der Umgebung dieser Saugstelle befindlichen Soll-Reißstellen abreißen, können durch nacheinander erfolgendes Aktivieren der Sauger, die Soll-Reißstellen entlang der nacheinander aktivierten Sauger abgerissen werden, was also in etwa den gleichen Effekt bewirkt wie das Schrägstellen der Sauger-Ebene samt angesaugtem Zuschnitt relativ zur Oberseite des Stapels.

In einer Bauform kann das Roboter-Werkzeug so ausgebildet sein, dass die Sauger einzeln oder in Gruppen aus einer gemeinsamen Sauger-Ebene in der sich alle Sauger in der am weitesten nach unten ausgefahrenen Position befinden, nach oben verlagert werden können. Auch hierdurch kann der besagte Effekt erreicht werden.

Dabei sind nicht unbedingt mechanische Mittel zum Verstellen der Sauger zwischen der oberen und unteren Endlage notwendig, sondern dies kann durch die Unterdruck-Beaufschlagung beim Aktivieren der Sauger pneumatisch erfolgen, indem beispielsweise zwischen Grundkörper und Sauger ein - beispielsweise hülsenförmiger - Pneumatik-Zylinder oder Falten-Balg eingebaut ist.

Außer dem als Trenn-Roboter ausgebildeten Roboter umfasst ein solcher Zuschnitt-Vereinzeler erfindungsgemäß einen Halter für den Rest des Stanzbogens, insbesondere einen Niederhalter, um zu verhindern, dass der Rest des Stanzbogens neben dem abzulösenden Zuschnitt vom Stapel mit angehoben wird und dadurch kein Abreissen der Soll-Reissstellen erfolgt.

Bei mehreren Niederhaltern oder einem großflächigen Niederhalter sollte die wenigstens eine Unterseite des Niederhalters in einer horizontalen und insbesondere gemeinsamen Niederhalter-Ebene liegen.

Da die oft etwa rechteckigen Zuschnitte in der Regel nur an einer Längsseite und einer Breitseite noch mit angrenzenden Zuschnitten verbunden sind, wird als Niederhalter vorzugsweise ein L-förmiger Niederhalter verwendet, dessen beide Schenkel horizontalliegende entlang nahe der Längsseite und nahe der Breitseite angeordnet werden.

Hinsichtlich der Anordnung besteht eine erste Möglichkeit darin, dass der Niederhalter an dem Grundgestell der Vorrats-Station befestigt ist, vorzugsweise zumindest in der Höhe verstellbar befestigt ist. Dabei ist es unerheblich, mit welcher Mechanik dies erfolgt. Auch ein Roboter könnte hierfür eingesetzt werden

Sofern mittels einer Hubvorrichtung der oberste Stanzbogen immer in etwa auf der gleichen Höhe gehalten wird, unabhängig von der momentanen Höhe des Stapels von Stanzbögen, benötigt der Niederhalter nur einen geringen Hub in der Höhe und kann insbesondere beim Anfahren der unteren Position, der Niederhalte-Position Kraftgesteuert sein.

Der Roboter muss auf die Oberseite des Stapels zugreifen können. Da der Arbeitsbereich des Roboters in der Höhe oft relativ klein ist, da der Roboter mit seiner Roboter-Basis in einer fixen Höhe am Grundgestell der Verpackungsmaschine befestigt ist und der Roboterarm selbst nur eine begrenzte Höhenverstellung des Werkzeuges zulässt, ein voller Stapel aus Stanzbögen jedoch bis annähernd zur Höhe des Grundgestells aufragen kann, muss entweder der ganze Stapel, insbesondere die Palette auf der er steht, in der Höhe gesteuert verlagerbar sein oder die Roboter-Basis am Grundgestell der Verpackungsmaschine.

Wenn der angelieferte Stapel von Stanzbögen zusammen mit der Palette in die Vorrats-Station eingebracht wird, sollte diese vorzugsweise keinen eigenen Boden und damit keine Stufe am Eingang aufweisen, damit die Palette oder der Stapel von Stanzbögen von einem entsprechenden Förderfahrzeug auf dem Untergrund fahrend, auf dem auch der Vereinzeler steht, in die Vorrats-Station eingefahren werden kann.

Hubmittel, um den gesamten Stapel, insbesondere die Palette auf der er steht, in der Höhe nach oben so nachzuführen, dass sich der oberste Stanzbogen immer auf der gleichen Höhe befindet, können dann beispielsweise nur an seitlichen Säulen des Grundgestells des Vereinzelers, insbesondere dessen Vorrats-Station, oder der Verpackungsmaschine befestigt werden oder von deren oberen Ende herabragen.

Alternativ ist der Trenn-Roboter gesteuert höhenverstellbar am Grundgestell der Verpackungsmaschine befestigt, damit dieser immer auf die Oberseite des Stapels zugreifen kann.

Der wenigstens eine Niederhalter muss jedoch auch in mindestens einer, besser beiden, vorzugsweise senkrecht aufeinander stehenden, horizontalen Querrichtungen verstellbar sein, insbesondere gegenüber dem Grundgestell der Vorrats-Station und vorzugsweise automatisch und gesteuert verstellbar sein, zur Anpassung an die Position des jeweils zu entnehmenden Zuschnitts im Stanzbogen, aber auch bei Formatwechsel zur Anpassung an die neue Form oder Größe des einzelnen Zuschnitts als auch insgesamt der Gestaltung des Stanzbogens.

Eine Möglichkeit besteht darin, dass der Niederhalter aus mehreren Niederhalter-Balken besteht, beispielsweise einem oder zwei parallel verlaufende Niederhalter-Balken, die in einer horizontalen Querrichtung, beispielsweise der X-Richtung, verlaufen und mittels entsprechender Führungen in einer darauf z.B. senkrecht stehenden anderen Querrichtung, der Y-Richtung, entlang des entweder Grundgestells der Vorrats-Station oder einem z.B. rahmenförmigen Niederhalter-Rahmen verfahrbar sind, insbesondere automatisch gesteuert.

Zusätzlich können dann ebenfalls ein oder zwei in der anderen Querrichtung, hier der Y-Richtung, verlaufende Niederhalter-Balken vorhanden sein, die zwischen den beiden erstgenannten Niederhalter-Balken, insbesondere automatisch gesteuert, an beliebiger Position in deren Erstreckungsrichtung angeordnet werden können, damit sich alle Niederhalter möglichst nah an dem Umfang des herauszulösenden Zuschnittes befinden.

Eine zweite Möglichkeit besteht darin, den Niederhalter am Werkzeug-Grundkörper des Roboter-Werkzeuges zu befestigen, was natürlich dessen Gewicht erhöht und dessen Taktzeiten reduziert. Vorzugsweise können mehrere Niederhalter am Werkzeug-Grundkörper angeordnet sein und/oder in ihrer Position zum Werkzeug-Grundkörper verstellbar sein.

Eine bevorzugte Lösung würde dann darin bestehen, dass beispielsweise jedem Sauger ein einzelner Niederhalter zugeordnet werden kann, wobei insbesondere der zugeordnete Niederhalter an dem entsprechenden Sauger radial bzgl. des Werkzeug-Grundkörpers weiter außen angeordnet und befestigt sein kann, insbesondere in einem einstellbaren Abstand.

Wenn also beispielsweise die einzelnen Sauger an einem Sauger-Arm oder entlang von Sauger-Führungen, die insbesondere jeweils radial verlaufen, angeordnet sind, kann sich dort im Abstand weiter außen der Niederhalter befinden, sodass unter Umständen Sauger und Niederhalter nicht separat, sondern jeweils gemeinsam radial verstellt werden können zur Anpassung an eine neue Form oder Größe eines zu handhabenden Zuschnittes.

Damit der oder die obersten Stanzbögen des Stapels nicht unerwünschter Weise verrutschen können, kann die Vorrats-Station einen mechanischen Vorrats-Ausrichter umfassen, der zumindest den oder die obersten Stanzbogen, insbesondere den gesamten Stapel von Stanzbögen, mechanisch in einer Sollposition in der horizontalen Richtung hält oder ihn in die Sollposition bringt, was üblicherweise mittels seitlich an dem Stapel oder zumindest dem obersten Stanzbogen anliegenden oder anlegbaren, verstellbaren Anschlägen geschieht.

Ein solcher mechanischer Vorrats-Ausrichter und insbesondere dessen seitliche Anschläge können
- entweder am Vorrats-Grundgestell
- oder am Niederhalter-Grundgestell, insbesondere dem Niederhalter-Rahmen
- oder am Werkzeug-Grundkörper angeordnet sein,
wobei in der Praxis primär die ersten beiden Varianten in Frage kommen.

Alternativ oder ergänzend kann statt eines mechanischen Ausrichtens zumindest des obersten Stanzbogens in eine Sollposition in der horizontalen Ebene die Lage des Stanzbogens und damit auch des daraus zu vereinzelnden Zuschnittes mittels eines - vorzugsweise berührungslos arbeitenden - Positions-Scanners ermittelt werden, sodass dem Trenn-Roboter die Position des zu ergreifenden Zuschnittes bekannt ist und er gezielt zugreifen kann. Der Positions-Scanner kann am Werkzeug oder am Grundgestell des Vereinzelers befestigt sein.

Hierfür ist der Positions-Scanner in der Regel mit der Steuerung des Zuschnitts-Vereinzelers verbunden, der diese Daten, ggfs. entsprechend aufbereitet und an den Trenn-Roboter weitergibt.

Ferner kann ein - vorzugsweise ebenfalls berührungslos arbeitender - Prüf-Scanner vorhanden sein, der den bereits vereinzelten, also aus dem Stanzbogen herausgelösten, Zuschnitt auf Qualitätsmerkmale prüft, beispielsweise hinsichtlich seiner Form und/oder Größe und/oder Qualität seiner Außenkanten und/oder der Qualität seiner Bedruckung und/oder des Motivs der Bedruckung prüfen kann.

Ein solcher Prüf-Scanner kann entweder an einer separaten Prüf-Station vorhanden sein, die nicht mit der Vorrats-Station oder einer anderen Station übereinstimmt. Sie sollte sich jedoch im Greif-Bereich des Trenn-Roboters befinden, damit dieser den vereinzelten Zuschnitt in einer solchen Prüf-Station ablegen kann.

Ein solcher Prüf-Scanner kann jedoch auch direkt am Trenn-Roboter, insbesondere an dessen Werkzeug, insbesondere dessen Werkzeug-Grundkörper, so befestigt sein, dass er nach dem Heraustrennen des Zuschnitts dessen Kanten überprüfen kann.

Bevorzugt umfasst der Zuschnitt-Vereinzeler auch ein Zuschnitt-Magazin, indem - vorzugsweise vom Trenn-Roboter - bereits vereinzelte Zuschnitte abgelegt werden. Der dortige Vorrat an vereinzelten Zuschnitten dient der Überbrückung von Unterbrechungen des Vereinzelungs-Betriebes, beispielsweise, wenn die Vorrats-Station neu beladen werden muss.

Hinsichtlich einer **Verpackungsmaschine,** die einen Zuschnitt-Vereinzeler zum vereinzelten von über Mikroverbindungen zusammenhängende Zuschnitte aus einem Stanzbogen umfasst, wird diese vorzugsweise auch einen Karton-Aufrichter zum Herstellen eines dreidimensionalen Kartons aus dem ebenen Zuschnitt umfassen.

Vorzugsweise ist dabei der Zuschnitt-Vereinzeler gemäß vorstehender Beschreibung ausgebildet.

Vorzugsweise kann eine solche Verpackungsmaschine auch einen oder mehrere Umsetzer aufweisen, beispielsweise Roboter, um die einzelnen Zuschnitte oder auch ganze Zuschnitt-Gruppen von dem Zuschnitt-Vereinzeler auf den Zuförderer zu einem Karton-Aufrichter umzusetzen oder den Zuschnitt direkt in den Karton-Aufrichter einbringen und insbesondere darin auch aufrichten und in seiner dreidimensionalen Gestaltung fixieren.

In diesem Fall kann der Umsetzer oder der Zuförderer zum Aufrichter gleichzeitig als eine Ausrichte-Einheit zum Ausrichten des Zuschnitts in eine vorgegebene Soll-Position auf dem Zuförderer oder Aufrichter ausgebildet sein, die dann nicht mehr als separates Bauteil vorhanden sein muss.

### c) Ausführungsbeispiele

Ausführungsformen gemäß der Erfindung sind im Folgenden beispielhaft näher beschrieben. Es zeigen:
- **Figuren 1a, b:**: eine erste Bauform des Vereinzelers in der Aufsicht in unterschiedlichen Funktionsstellungen,
- **Figuren 2a, b:**: der Vereinzeler der **Figuren 1a**, b in den gleichen Funktionsstellungen in der Seitenansicht,
- **Figuren 3a, b:**: eine zweite Bauform des Vereinzelers in der Aufsicht in unterschiedlichen Funktionsstellungen,
- **Figur 4a, b:**: eine erste Bauform des Greifwerkzeuges in der Aufsicht und in Seitenansicht,
- **Figur 5a, b:**: eine zweite Bauform des Greifwerkzeuges in der Aufsicht und in Seitenansicht,

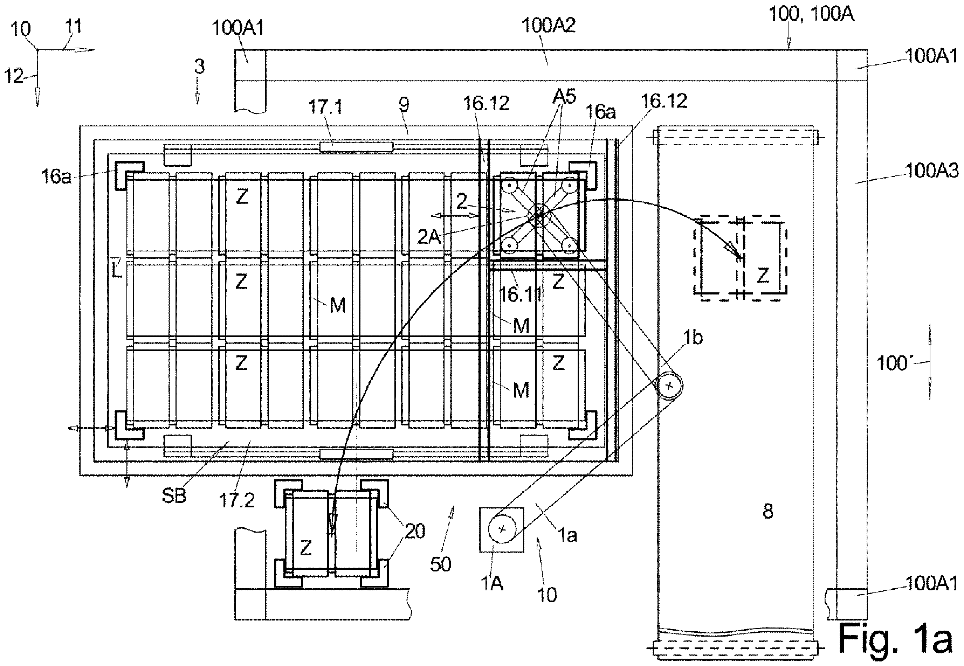

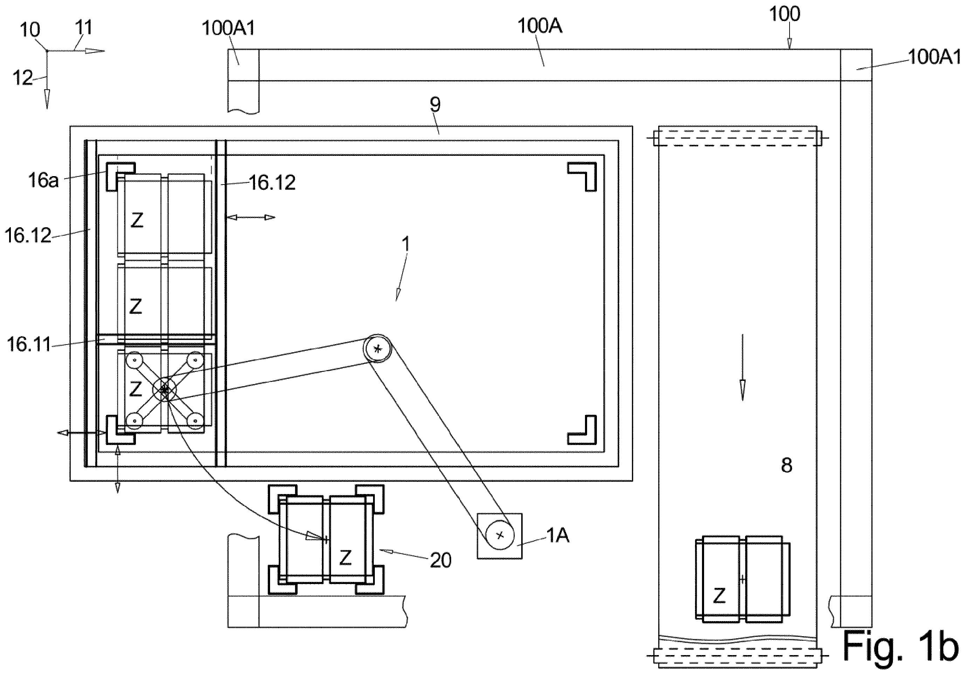

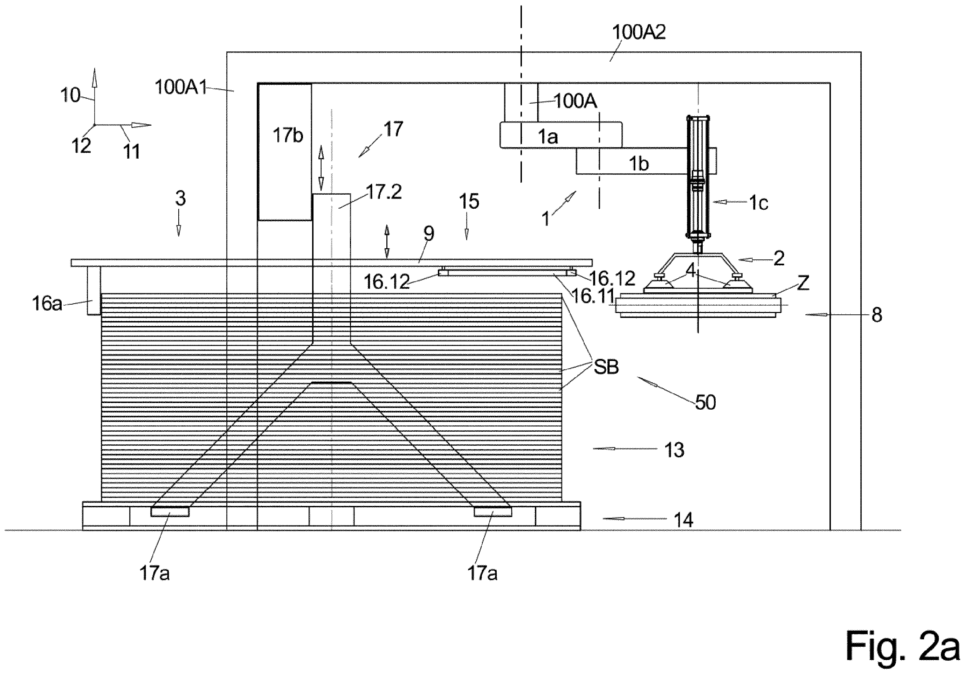

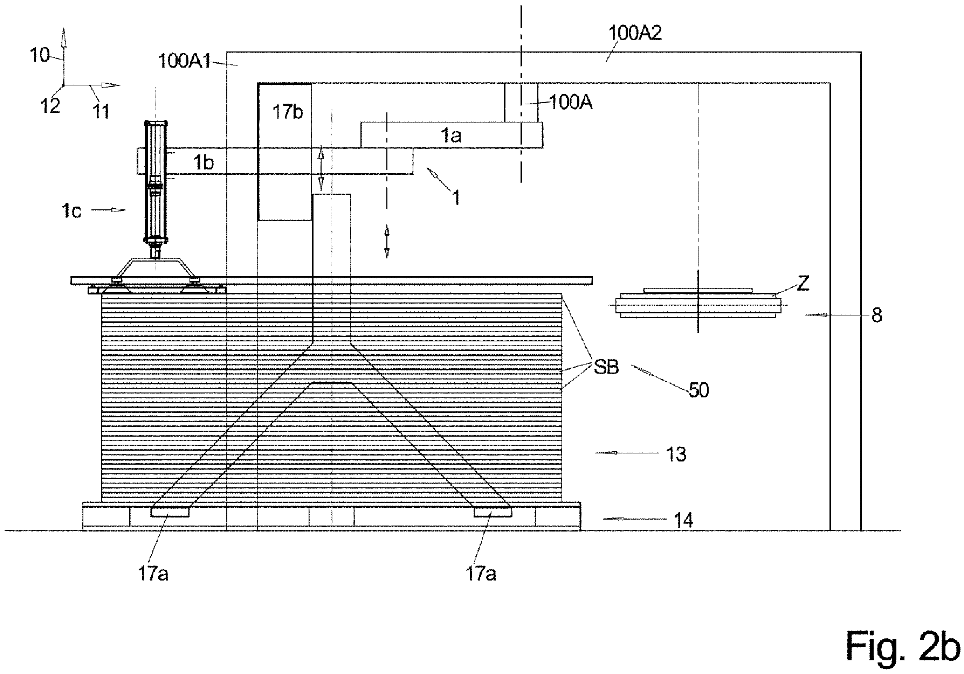

Die **Figuren 1a****,** **2a** zeigen in Aufsicht und Seitenansicht, letzteres in Blickrichtung entgegen der Durchlaufrichtung durch die Verpackungsmaschine 100, den Vereinzeler 50 in seinem in der Verpackungsstraße 100 verbauten Zustand in einer ersten Arbeitsstellung, und in den **Figuren 1b****,** **2b** in einer zweiten Arbeitsstellung.

Der Zuschnitt-Vereinzeler 50 umfasst zum einen eine Vorrats-Station 3 und zum anderen einen Trenn-Roboter 1 mit einem Greif-Werkzeug 2 an dessen Roboter-Arm zum Ergreifen und Hochheben eines einzelnen Zuschnittes Z aus dem obersten Stanzbogen SB des Stapels 13 von Stanzbögen, der auf einer Euro-Palette 14 angeliefert wird und in die Vorrats-Station 3 eingefahren und eingesetzt wird.

Wie die Figuren 1a, b zeigen, wird der Stapel 13 in den Innenraum eines Moduls der Verpackungsmaschine 100 von der Seite her eingefahren, sodass er mit seiner Längsrichtung 11 quer zur Durchlaufrichtung 100` der Verpackungsmaschine 100 steht und zur Seite noch aus dem Grundgestell 100A des Moduls vorsteht.

Bei dem Roboter 1 handelt es sich um hier einen seriellen Roboter, der mit seiner Roboter-Basis 1A im oberen Bereich am Grundgestell 100A der Werkzeugmaschine 100 aufgehängt ist.

Die Werkzeugmaschine 100 besteht in Durchlaufrichtung 100' aus mehreren hintereinander angeordneten Modulen aus jeweils dem gleichem Grundgestell 100A, bestehend aus jeweils vier im Viereck angeordneten Säulen 1 00A1, deren obere Enden durch in Durchlaufrichtung 100verlaufenden Längstraversen 100A3 und Quertraversen 100A2 miteinander verbunden sind.

Der Roboter 1 ist mit seiner Roboter-Basis 1A an einer der Quertraversen 100A2 eines Grundgestells 100A oder einer zusätzlichen Quertraverse hängend befestigt, und sein Oberarm 1a ist gegenüber der Roboter-Basis 1A um eine aufrechte Schwenkachse verschwenkbar.

Am freien Endbereich des Oberarmes 1a ist der Unterarm 1b ebenfalls um eine aufrechte Achse verschwenkbar, der in seinem freien Endbereich eine Vertikal-Traverse 100c trägt, die gegenüber dem Unterarm 1b in der Höhe begrenzt verfahrbar ist und an ihrem unteren Ende ein Greifwerkzeug 2, hier dargestellt mit zwei Saugern 4, trägt.

Wegen der nur begrenzten Höhenverstellung der Vertikal-Traverse 1c und damit auch der Sauger 4 muss der sich abbauende Stapel 13, insbesondere dessen oberster Stanzbogen SB, in der Höhe nachgeführt werden, weshalb eine Hubvorrichtung 17 vorhanden ist.

Diese kann beidseits des in die Vorrats-Station 3 eingefahren Stapels 13 samt Palette 14 mit je einem Hubarm 17.1, 17.2, der sich nach unten hin gabelt und am unteren Ende zum jeweils anderen Hubarm hin vorstehende kurze Zinken 17a aufweist, unter die Oberplatte der Palette 14 eingreifen, um die ganze Palette 14 hochzuheben. Zu diesem Zweck ist der obere Teil jedei8nes der Hubarme 17.1, 17.2 oder beide gemeinsam an einer Hub-Führung 17b geführt und motorisch anhebbar.

Damit beim Ergreifen und Anheben eines der Zuschnitte Z mittels des Trenn-Roboters 1 und dessen Greif-Werkzeug 2 der Rest dieses obersten Stanzbogens SB nicht mit angehoben wird, was ein unkontrolliertes Abreissen der Mikroverbindungen M zur Folge hätte, werden beim Hochheben die angrenzenden Zuschnitte Z auf der Oberseite des Stapels 13 festgehalten mittels eines Niederhalters 15.

Der Niederhalter 15 besteht in diesem Fall aus einem in der Aufsicht rechteckigen umlaufenden Niederhalter-Rahmen 9, dessen innerer Freiraum insbesondere größer ist als der größte aufzunehmende Stapel 13, in der Regel größer als eine Euro-Palette 14.

Im inneren des Rahmens 9 sind zwei in ihrem Abstand veränderbare, in der Querrichtung 12 des Stapels 13 verlaufende, Niederhalter-Balken 16.12 geführt, und insbesondere motorisch angetrieben verstellbar oder manuell verstellbar.

Zwischen diesen beiden Niederhalter-Balken 16.12 ist ein in der anderen horizontalen Querrichtung 11 verlaufender, in der Länge sich anpassender, Niederhalter-Balken 16.11 befestigt, der in Längsrichtung 11 des Stapels 13 verläuft und in dessen Querrichtung 12 verstellbar ist, also entlang des Niederhalter-Balkens 16.12 verfahrbar ist, insbesondere automatisch gesteuert verfahrbar ist.

Vor dem Anheben des zu vereinzelnden Zuschnittes Z werden diese Niederhalter-Balken in der Aufsicht betrachtet möglichst knapp außerhalb der Trennlinien L zwischen den aneinandergrenzenden Zuschnitten Z positioniert, und ebenso werden die Sauger 4 des Greif-Werkzeuges 2 möglichst nah und innerhalb des Zuschnittes Z an den Trennlinien L positioniert.

Beim Anheben des zu vereinzelnden Zuschnittes sind und bleiben die Niederhalter 15 bis auf Kontakt mit dem obersten Stanzbogen SB abgesenkt, weshalb der Niederhalter, hier insbesondere der Niederhalter-Rahmen 9, in der Höhe gesteuert verstellbar ist, insbesondere hier befestigt entweder an den Hubarmen 17.1, 17.2 oder direkt an einer eigenen Hubführung, die am Grundgestell 100A der Werkzeugmaschine befestigt ist.

Im vorliegenden Fall ist zwischen der Vorrats-Station 3, also dem eingestellten Stapel 13, und der gegenüberliegenden Längsseite des Grundgestells 100A noch ausreichend Platz, um dort einen in Durchlaufrichtung 100' laufenden Abförderer 8 anzuordnen, auf dem der Trenn-Roboter 1 den vereinzelten Zuschnitt Z jeweils ablegt, wie in **Figur 1a** nur angedeutet und in **Figur 2a** eben stattfindet.

Die **Figuren 1b**, **2b** zeigen dagegen, wie ein auf dem Abförderer 8 bereits liegender Zuschnitt Z von diesem abgeführt wird, während der Roboter 1 mit seinem Greif-Werkzeug 2 eben einen der letzten drei von eine Reihe bildenden Zuschnitten Z ergreift, die sich bereits in der Aufsicht betrachtet außerhalb des Grundgestells 100A dieses Moduls der Verpackungsmaschine 100 befinden, wobei der Niederhalter 15 mit seinem Niederhalter-Balken 16.11, 16.12 so eingestellt ist, dass der sich in Querrichtung 12 des Stapels 13 anschließende Zuschnitt Z von dem Niederhalter-Balken 16.11 niedergehalten wird, während die beiden in Querrichtung 12 verlaufenden Niederhalter-Balken 16.12 bereits außer Funktion sind, da es dort keinen Stanzbogen mehr gibt, auf dem sie auflegen können.

Auch bei Aufnahmen von Zuschnitten Z an anderen Positionen des Stanzbogens ist in der Regel einer dieser Niederhalter-Balken 16.2 insofern außer Funktion, als er auf den Stanzbogen nicht mehr aufliegt, sondern nur noch der Führung des in der anderen Richtung verlaufenden Niederhalter-Balken 16.11 dient.

In den **Figuren 1a**, b sind ferner in der Aufsicht betrachtet, in diesem Fall winkelförmige, Stapel-Ausrichter 16a zu erkennen, die vorzugsweise ebenfalls am Niederhalter-Rahmen 9 befestigt sind, jedenfalls Bestandteil der Vorrats-Station 3 sind und sich von oben so weit nach unten erstrecken - wie in **Figur 2a** beispielhaft eingezeichnet - dass zumindest der oberste oder einige der obersten Stanzbögen SB zwischen den exakt positionierbaren Stapel-Ausrichtern 16a positioniert gehalten werden, die gegenüber dem Niederhalter-Rahmen 9 vorzugsweise in Längsrichtung 11 als auch in Querrichtung 12 des eingesetzten Stapels verstellbar sind, sei es manuell oder automatisch gesteuert verstellbar, sodass der Roboter 1 die exakte Ist-Lage des obersten Stanzbogens SB kennt.

Die **Figuren 1a**, b zeigen - in **Figur 2a**, **b** aus Übersichtlichkeitsgründen weggelassen - auch ein Zuschnitt-Magazin 20, in dem der Trenn-Roboter 1 einen vereinzelten Zuschnitt Z ablegen kann, statt ihn direkt auf dem Abförderer 8 abzulegen und in den Verpackungsprozess einzugeben.

Sollte die Funktion des Zuschnitt-Vereinzelers 50 unterbrochen sein, weil beispielsweise eine neue volle Palette 14 in die Vorrats-Station 3 eingestellt werden muss, so kann der Trenn-Roboter 1 diese Zeit überbrücken, indem er Zuschnitte aus dem Zuschnitt-Magazin 20 entnimmt und auf den Abförderer legt und die Verpackungsmaschine damit weiterhin mit vereinzelten Zuschnitten versorgt.

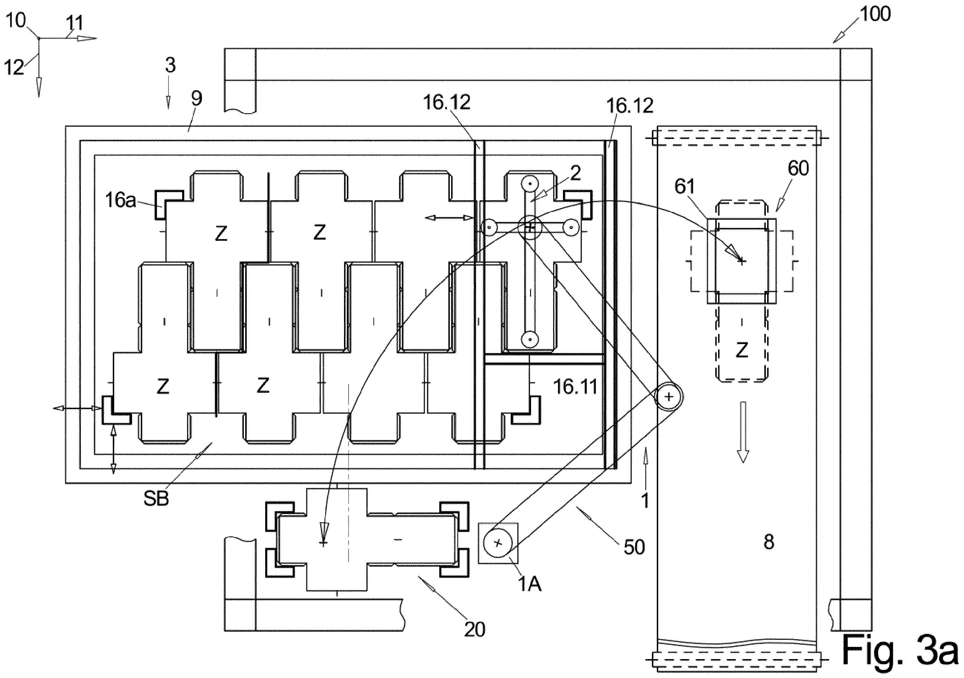

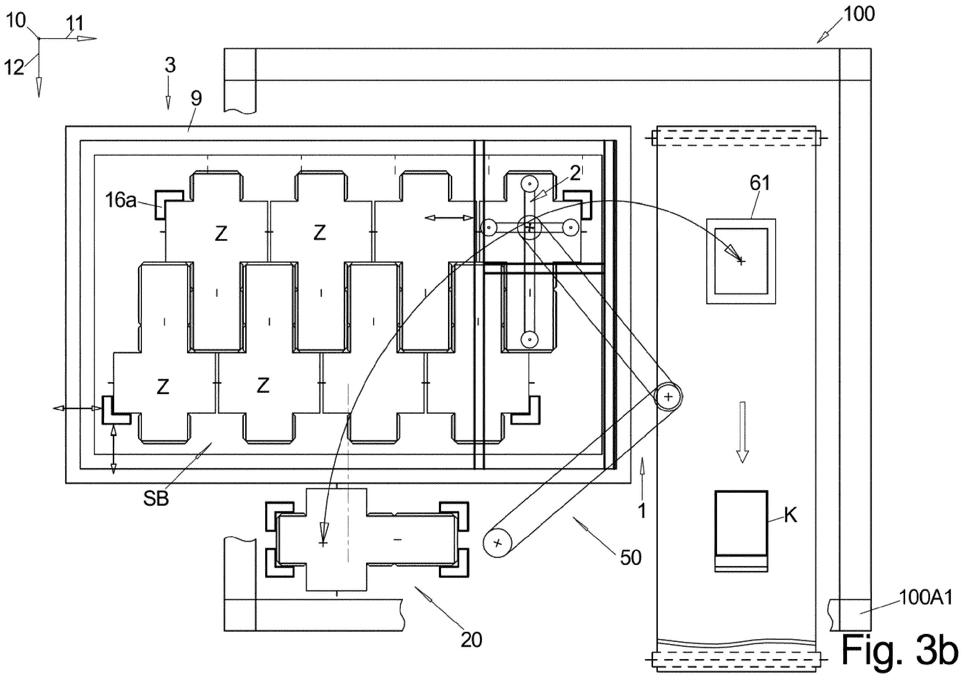

Während in den **Figuren 1a**, b die Zuschnitte Z im Wesentlichen rechteckig waren und in Reihen und Spalten nebeneinander angeordnet waren, zeigen die Aufsichten der **Figuren 3a**, b stark kreuzförmig ausgeprägte Zuschnitte Z, die einander sowohl in Längsrichtung 11 als auch in Querrichtung 12 des Stanzbogens teilweise überlappen, sodass dies mehrfach gewinkelte Trennlinien L zwischen den einzelnen Zuschnitten bewirkt. Dementsprechend können zwei sich rechtwinkelig kreuzende Niederhalter-Balken nie entlang der gesamten Trennlinie verlaufen, sondern nur über Teilbereiche der Trennlinien.

Falls dies nicht ausreichend ist, können statt der geraden Niederhalter-Balken z.B. 16.11 an die spezifische Form des Zuschnitts angepasste, auch gewinkelte oder eine gewinkelte Kante aufweisende Niederhalter-Balken 16.11, 16.12 verwendet werden.

Die **Figuren 3a**, b unterscheiden sich ferner von den **Figuren 1a**, b dadurch, dass von dem Trenn-Roboter 1 der vereinzelte Zuschnitt Z nicht einfach auf dem Abförderer 8 abgelegt wird zum Abtransport, sondern sich über dem Abförderer 8 ein Aufrichter 60 mit der Aufrichte-Matrize 61 befindet, und der Roboter 1 den Zuschnitt Z zumindest positionsgenau auf dem Aufrichter 60 auflegt, oder diesen sogar durch die Matrize 61 hindurchdrückt, bis dieser darunter auf dem Abförderer 8 im aufgerichteten Zustand steht.

Dann muss allerdings vor dem Hindurchdrücken dafür Sorge getragen werden, dass das Greif-Werkzeug 2 an keiner Stelle in der Aufsicht betrachtet seitlich über den Boden-Abschnitt des Zuschnittes Z vorsteht oder es muss ein entsprechendes Press-Werkzeug aus der Unterseite des Grundkörpers 2a des Greif-Werkzeuges 2 als Pressstempel ausfahrbar sein.

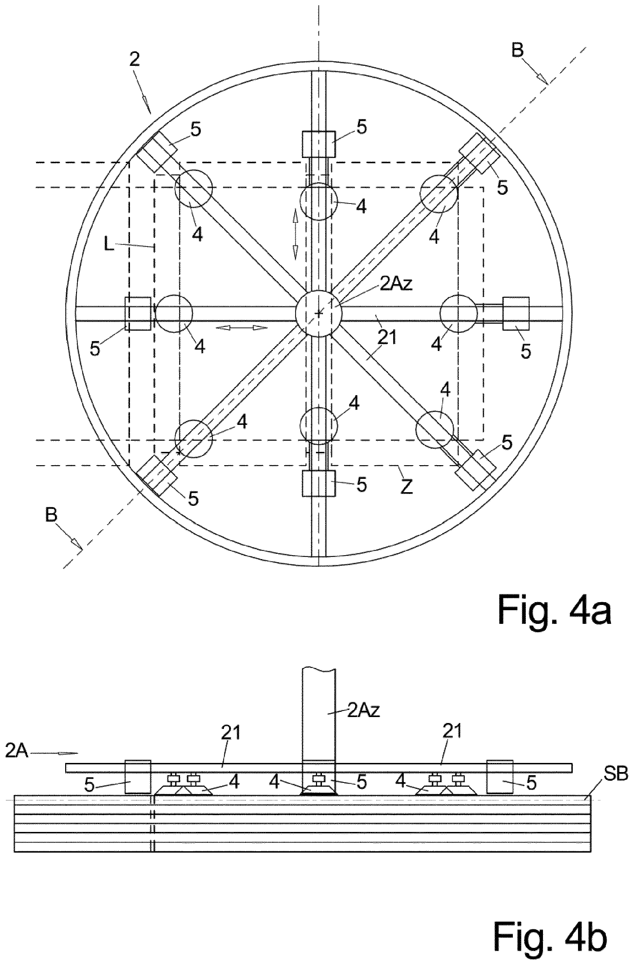

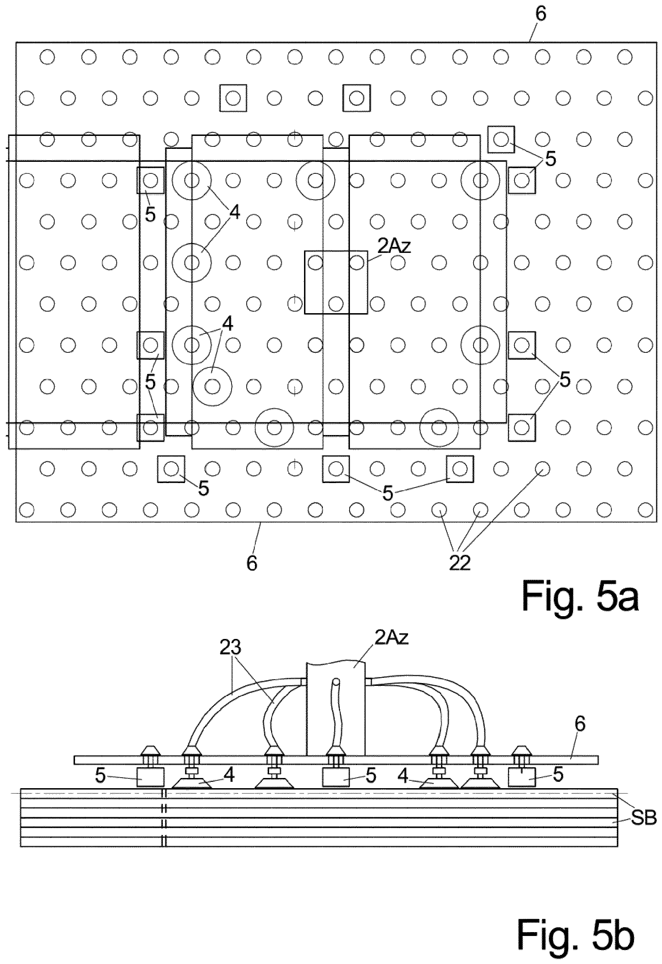

Die Probleme mit Anpassung von Niederhaltern entlang z.B. des Niederhalter-Rahmens 9, der in der Aufsicht betrachtet den gesamten Stapel 13 umgibt, lassen sich vermeiden oder minimieren, wenn die Niederhalter direkt am Grundköper 2A des Greif-Werkzeuges 2 angeordnet sind und dort verstellbar sind, wie in den beiden Bauformen der **Figuren 4a****, b** und **5a, b** dargestellt:
Bei der Bauform gemäß der **Figur 4a****, b** ragen von dem Zentralteil 2Az des Grundkörpers 2A radial, in diesem Fall 8 gleichmäßig über den Umfang verteilte, Speichen 21 ab, die zur Stabilisierung an ihren äußeren Enden über einen umlaufenden Ring verbunden sind.

Entlang der Speichen 21, also in radialer Richtung, ist sowohl ein Sauger 4 befestigt und verstellbar als auch ein Niederhalter 5, deren untere Kontaktflächen sich etwa auf gleicher Höhe befinden.

Bei der rechten Hälfte der **Figur 4a** einschließlich der genau nach oben und unten in **Figur 4a** verlaufenden Speichen 21 sind der jeweilige Sauger 4 mit dem jeweiligen, radial außen davon befindlichen, Niederhalter 5 zu einer festen Einheit miteinander verbunden, also in einem festen radialen Abstand.

Diese Funktionseinheit wird dann jeweils für den jeweiligen Zuschnitt Z so eingestellt, dass der Sauger 4 sich knapp innerhalb des Zuschnittes Z befindet - in der Aufsicht betrachtet - und der Niederhalter 5 knapp außerhalb.

Da dies je nach Verlauf der Umfangslinie des zu vereinzelnden Zuschnittes Z nicht immer den optimal geringen Abstand zum Umfang ergibt, sind an den drei nach links ragenden Speichen 21 alternativ die Sauger 4 und außerhalb davon liegende Niederhalter 5 unabhängig voneinander entlang der Speiche 21 verfahrbar, was - wie insbesondere an der genau nach links weisenden Speiche 21 ersichtlich - eine sehr nahe Positionierung des Saugers 4 innerhalb und des Niederhalters 5 außerhalb der Umfangslinie des Zuschnitts Z ermöglicht.

In der Regel werden diese Einstellungen nur einmal vor Beginn des Abarbeitens einer Charge von Zuschnitten Z manuell durchgeführt.

Demgegenüber zeigt die Bauform der **Figuren 5a****, b** eine Bauform, bei der der Grundkörper 2A des Greif-Werkzeuges 2 aus einer Lochplatte als Sauger-Tragplatte 6 besteht, die - ebenso wie das Speichenrad in **Figuren 4a**, b - größer ist als ein zu ergreifender Zuschnitt Z.

Sowohl Niederhalter 5 als auch Sauger 4 sind so ausgebildet, dass sie, insbesondere von unten, in eines dieser Löcher 22 einsteckbar sind und darin insbesondere verrasten.

Beim Ansaugen fahren die Sauger nach oben und/oder die Niederhalter nach unten, wodurch das Abreissen der Mikroverbindungen bewirkt wird.

Auf diese Art und Weise können die Sauger 4 einerseits und die Niederhalter 5 andererseits knapp innerhalb bzw. knapp außerhalb der Umfangslinie L des zu handhabenden Zuschnittes Z positioniert werden, und anschließend die Sauger 4 lediglich mittels - vorzugsweise steckbarer - Schläuche zur Unterdruck-Versorgung mit dem Zentralteil 2Az des Grundkörpers 2a zur Unterdruck-Versorgung verbunden werden.

### BEZUGSZEICHENLISTE

- 1: Trenn-Roboter
- 1A: Roboter-Basis
- 1Az: Grundkörper-Zentralbereich
- 1a: Oberarm
- 1b: Unterarm
- 1c: Vertikalstrebe
- 2: Greifwerkzeug
- 2A: Grundkörper
- 3: Vorrats-Station
- 3A: Grundgestell
- 4: Oberseiten-Greifer, Sauger
- 4': Sauger-Ebene
- 5: Sauger-Arm
- 6: Sauger-Tragplatte
- 7: Befestigungsvorrichtung, Durchgangsöffnung
- 8: Abförderer
- 9: Niederhalter-Rahmen
- 10: Vertikale
- 11: Längsrichtung Stanzbogen
- 12: Querrichtung Stanzbogen
- 13: Stapel
- 14: Palette
- 15: Niederhalter
- 15': Niederhalter-Ebene
- 15.11,15.12: Niederhalter-Balken
- 16: Vorrats-Ausrichter
- 16a: Anschlag
- 17: Hubvorrichtung
- 18: Positions-Scanner
- 19: Prüf-Scanner
- 20: Zuschnitt-Magazin
- 21: Speiche
- 22: Durchgangsöffnung
- 23: Schlauch

- 50: Zuschnitt-Vereinzeler
- 50*: Steuerung

- 60: Karton-Aufrichter
- 61: Matrize

- 100: Verpackungsmaschine
- 100': Durchlaufrichtung, Längsrichtung
- 100A: Grundgestell
- 100A1: Säule
- 100A2: Quertraverse
- 100A3: Längstraverse
- 112: Laufrichtung 102

- K: Karton
- L: Trennlinie
- M: Mikroverbindung, Soll-Reissstelle
- P: Produkt
- SB: Stanz-Bogen
- SB': Stanz-Bogen-Ebene
- Z: Zuschnitt

## Patentansprüche

1. **Zuschnitt-Vereinzeler** (50) zum Vereinzeln von flachen Zuschnitten (Z), insbesondere aus Kartonmaterial, zum Herstellen von formstabilen Umverpackungen wie Kartons (K), mit
- einer Vorrats-Station (3) in der ein, insbesondere vertikaler, Stapel (13), von insbesondere plattenförmigen Stanz-Bögen (SB) mit jeweils mehreren, in einer Ebene liegenden, aneinander anschließenden und miteinander über Soll-Reissstellen (M), insbesondere Mikroverbindungen (M), verbundenen Zuschnitten (Z), vorgehalten wird,
- einem Roboter (1) zum Entnehmen mindestens eines Zuschnittes des obersten Stanz-Bogens (SB) aus der Vorrats-Station (3),
- einer Steuerung (50*) zum Steuern zumindest aller beweglichen Teile des Zuschnitt-Vereinzelers (50),
**dadurch gekennzeichnet, dass**
- der Roboter (1) als Trenn-Roboter ausgebildet ist mit einem entsprechenden Greifwerkzeug (2), mit dem er in der Lage ist, nur einen oder eine Gruppe von mehreren, insbesondere noch zusammenhängenden, Zuschnitten (Z), von den miteinander verbundenen Zuschnitten (Z) des Stanz-Bogens (SB) zu ergreifen und durch Abheben vom Stapel und dabei Abreissen der Soll-Reissstellen (M) gegenüber dem wenigstens einen benachbarten Zuschnitt (Z) des Restes des obersten Stanzbogens (SB) zu separieren,
- wenigstens ein Niederhalter (15) vorhanden ist zum Verhindern des Abhebens des restlichen Stanz-Bogens (SB) beim Anheben des vom Trenn-Roboter (1) ergriffenen Zuschnittes (Z).

2. Zuschnitt-Vereinzeler nach Anspruch 1,
**dadurch gekennzeichnet, dass**
- das Greifwerkzeug (2) als Greifer einen oder mehrere, insbesondere in einer horizontalen Greif-Ebene (4') angeordnete, Oberseiten-Greifer, insbesondere Adhäsionsgreifer oder Sauger (4), aufweist,
- insbesondere in der Aufsicht betrachtet die Position der Sauger (4) am Werkzeug-Grundkörper (2A) verstellbar ist,
- insbesondere gegenüber dessen Mittelbereich (2Az) radial verstellbar ist.

3. Zuschnitt-Vereinzeler nach Anspruch 2,
**dadurch gekennzeichnet, dass**
- jeder Oberseiten-Greifer (4) an einem radial verlaufenden Saugerarm (5) befestigt ist und entweder in seiner Position entlang des Saugerarmes (5) verstellbar ist oder am Ende des Saugarmes (5) angeordnet ist und der Saugerarm (5) längenverstellbar ist
oder
- jeder Oberseiten-Greifer (4) in oder an einer radialen am Werkzeug-Grundkörper (2A) ausgebildeten Sauger-Führung verstellbar befestigt ist
oder
- der Werkzeug-Grundkörper (2A) eine Sauger-Tragplatte (6) umfasst mit einer Vielzahl von, insbesondere radial als auch in Umfangsrichtung um den zentralen Bereich des Grundkörpers (2A) herum angeordneten, Befestigungsvorrichtungen für Oberseiten-Greifer (4).

4. Zuschnitt-Vereinzeler nach einem der Ansprüche 2 oder 3,
**dadurch gekennzeichnet, dass**
- der Roboter (1) oder das Greifwerkzeug (2) so ausgebildet ist, dass nach dem Aktivieren der Oberseiten-Greifer (4) die Sauger-Ebene (4') in eine Schrägstellung zur Horizontalen (11, 12) verstellt werden kann
und/oder
- das Greifwerkzeug (2) so ausgebildet ist, dass die einzelnen Oberseiten-Greifer (4) gesteuert in einer bestimmten Reihenfolge, einzeln oder in Gruppen, aktivierbar sind
und/oder
- das Roboter-Werkzeug (2) so ausgebildet ist, dass Oberseiten-Greifer (4) einzeln oder in Gruppen gesteuert aus der Sauger-Ebene (4') nach oben verlagert werden können,
- insbesondere so, dass jeder Oberseiten-Greifer (4) beim Aktivieren gleichzeitig oder zeitversetzt hierzu aus der Sauger-Ebene (4') nach oben verlagert wird.

5. Zuschnitt-Vereinzeler nach einem der vorhergehenden Ansprüche, **dadurch gekennzeichnet, dass**
- der wenigstens eine Niederhalter (15) an einem Grundgestell (3A) der Vorrats-Station (3) beweglich befestigt ist
- insbesondere in der Höhe, insbesondere der Vertikalen (10) beweglich als auch dem wenigstens einer der beiden horizontalen Querrichtung (11,12) ein hierzu beweglich befestigt ist,
- insbesondere in einem Niederhalter-Rahmen (9) in einer oder beiden horizontalen Querrichtungen (11,12) verlaufende Niederhalter-Balken (15.11, 15.12) in wenigstens jeweils einer, vorzugsweise beiden, Querrichtung (11,12) verstellbar sind, insbesondere gesteuert automatisch verstellbar sind,
und/oder
bei mehreren Niederhaltern (15)
- entweder die Unterseiten der Niederhalter (15) in einer gemeinsamen horizontalen Niederhalter-Ebene (15') liegen
- oder die Niederhalter so ausgebildet sind, dass sie sich an eine unebene, insbesondere durchhängende, Oberseite des Stapels anpassen können.

6. Zuschnitt-Vereinzeler nach einem der vorhergehenden Ansprüche, **dadurch gekennzeichnet, dass**
- der wenigstens eine Niederhalter (15) am Werkzeug-Grundkörper (2A) des Roboter-Werkzeuges (2) befestigt ist,
- insbesondere mehrere Niederhalter (15) und/oder in ihrer Position zum Werkzeug-Grundkörper (2A) verstellbar angeordnet sind,
und/oder wenn der Zuschnitt-Vereinzeler nach einem der Ansprüche 2 oder 3 ist,
- jedem Oberseiten-Greifer (4) ein Niederhalter (15) zugeordnet ist,
- insbesondere an jedem Oberseiten-Greifer (4) ein radial bezüglich des Werkzeug-Grundkörpers (2A) weiter außen positionierter Niederhalter (15) befestigt ist.

7. Zuschnitt-Vereinzeler nach einem der vorhergehenden Ansprüche, **dadurch gekennzeichnet, dass**
- die Vorrats-Station (3) einen mechanischen Vorrats-Ausrichter (16) umfasst, der zumindest den obersten Stanz-Bogen (SB), insbesondere den gesamten Stapel (13) mittels seitlichen, insbesondere verstellbaren, insbesondere gesteuert verstellbaren, Anschlägen (16a - d) in die Soll-Position in den beiden horizontalen Richtungen (11, 12) hält und/oder bringt, insbesondere
der mechanische Vorrats-Ausrichter (16)
- entweder am Vorrats-Grundgestell (3A)
- oder am Niederhalter-Rahmen (9)
- oder am Werkzeug-Grundkörper (2A)
angeordnet ist.

8. Zuschnitt-Vereinzeler nach einem der vorhergehenden Ansprüche, **dadurch gekennzeichnet, dass**
- die Vorratsstation (3) oder der Trenn-Roboter (1) einen berührungslos arbeitenden Positions-Scanner (18) für die Lage des obersten Stanz-Bogens (SB) in der horizontalen Ebene relativ zum Vorrats-Grundgestell umfasst,
- der Trenn-Roboter mit dem Position-Scanner, insbesondere über die Steuerung, datentechnisch verbunden ist, sodass er den zu ergreifenden Zuschnitt (Z) dennoch in der gleichen Greif-Position des Werkzeug-Grundkörpers zum Zuschnitt ergreifen kann
und/oder
- ein, insbesondere nach oben oder zur Seite hin offenes, Zuschnitt-Magazin (20) in einer solchen Position vorhanden ist, dass der Trenn-Roboter (1) einen von ihm gehaltenen Zuschnitt (Z) darin ablegen kann.

9. Zuschnitt-Vereinzeler nach einem der vorhergehenden Ansprüche, **dadurch gekennzeichnet, dass**
- ein berührungslos arbeitender Prüf-Scanner (19) vorhanden ist, der den vereinzelten Zuschnitt (Z) auf Qualitätsmerkmale, insbesondere seine Form und/oder Größe und/oder Qualität seiner Außenkanten und/oder Qualität seiner Bedruckung und/oder Motiv seiner Bedruckung, überprüft, insbesondere der Prüf-Scanner (19)
- entweder an einer von der Vorrats-Station (3) und dem Zuschnitt-Magazin (20) separaten Prüf-Station vorhanden ist,
- die insbesondere stromabwärts der Vorrats-Station (3) und/oder stromaufwärts des Zuschnitt-Magazins (20) angeordnet ist
- oder am Trenn-Roboter (1), insbesondere am Werkzeug-Grundkörper (2A), angeordnet ist.

10. Zuschnitt-Vereinzeler nach einem der vorhergehenden Ansprüche, **dadurch gekennzeichnet, dass**
die Vorratsstation eine Hubvorrichtung (17) umfasst, die den gesamten Stapel (13), insbesondere einschließlich des Gebindes (14) auf dem er ruht, in der Höhe entsprechend der abnehmenden Höhe des Stapels (13) nachzuführen, sodass sich der oberste Zuschnitt (Z) immer etwa auf der gleichen Höhe befindet.

11. **Verpackungsmaschine** (100) zum Einsetzen und Verpacken von Produkten (P) in einer formstabilen Umverpackung, insbesondere einem Karton (K), mit
- einem Karton-Aufrichter (60) zum Herstellen eines Kartons (K) aus einem ebenen Zuschnitt (Z) aus Kartonmaterial,
- mehreren Umsetz-Robotern entlang einer Umsetzstrecke zum Umsetzen von Produkten (P) in Kartons (K),
**gekennzeichnet durch**
- einen Zuschnitt-Vereinzeler (50) zum Vereinzeln von einzelnen Zuschnitten (Z) aus einem Stanz-Bogen (SB) mit mehreren miteinander über Soll-Reissstellen (M), insbesondere Mikroverbindungen (M), verbundenen Zuschnitten (Z),
- wobei der Zuschnitt-Vereinzeler (50) insbesondere nach einem der vorhergehenden Ansprüche ausgebildet ist.

12. Verpackungsmaschine nach Anspruch 11,
**dadurch gekennzeichnet, dass**
- die Verpackungsmaschine (100) einen Umsetzer, insbesondere einen Umsetz-Roboter, zum Umsetzen eines einzigen oder mehrerer vereinzelter Zuschnitte (Z) von dem Zuschnitt-Magazin zu dem Karton-Aufrichter (60) oder einen Zuförderer zu dem Karton-Aufrichter (60) umfasst,
- der Umsetzer (110) oder der Zuförderer als Ausrichte-Einheit ausgebildet ist,
und/oder
- der Zuschnitt-Vereinzeler (50) und/oder der Trenn-Roboter (1) so in der Verpackungsmaschine (100) positioniert ist, dass er einen vereinzelten oder eine Gruppe von vereinzelten, von ihm gehaltenen Zuschnitt/en (Z) direkt auf dem durch die Verpackungsmaschine (100) führenden Transportsystem (8) ablegen kann oder wahlweise auch in einem Zuschnitt-Magazin (20) ablegen kann.

13. **Verfahren** zum Erzeugen vereinzelter Zuschnitte (Z)
- aus einem Stapel (13) von, insbesondere plattenförmigen, Stanz-Bögen (SB) mit mehreren, etwa in einer Ebene liegenden und aneinander anschließenden, miteinander über Soll-Reissstellen (M), insbesondere Mikroverbindungen (M), verbundenen Zuschnitten (Z),
- insbesondere mittels eines Zuschnitt-Vereinzelers (50) nach einem der vorhergehenden Ansprüche,
**dadurch gekennzeichnet, dass**
- ein einziger oder mehrere Zuschnitte (Z) aus dem obersten oder vordersten, dabei insbesondere auf dem Stapel liegenden, Stanz-Bogen (SB) automatisch ergriffen und aus dessen Bogen-Ebene heraus bewegt wird unter Abreißen der Soll-Reissstellen (M),
- dabei der restliche Stanz-Bogen (SB) automatisch auf dem Stapel gehalten wird.

14. Verfahren nach Anspruch 13,
**dadurch gekennzeichnet, dass**
- vor dem Vereinzeln der Zuschnitte (Z), insbesondere vor dem Stapeln der Stanz-Bögen (SB), aus den Stanz-Bögen (SB) der durch das Stanzen des Bogens (B) erzeugte Innen-Abfall und/oder der Außen-Abfall abseits der Zuschnitte (Z), insbesondere das Stanz-Gitter, des Stanz-Bogens (SB) entfernt wird,
und/oder
- die Zuschnitte (Z), insbesondere noch vor dem Heraustrennen aus dem Stanz-Bogen (SB), zumindest auf einer Seite gebrauchsfertig bedruckt werden.

15. Verfahren nach einem der vorhergehenden Verfahrensansprüche,
**dadurch gekennzeichnet, dass**
- der vereinzelte Zuschnitt (Z) auf Qualitätsmerkmale, insbesondere Form und/oder Größe und/oder Qualität der Umfangskanten und/oder Qualität der Bedruckung und/oder Motiv der Bedruckung, überprüft wird,
- insbesondere vor Ablegen in einem Zuschnitt-Magazin (20) oder auf dem Transportsystem (8) der nachgeordneten Maschine, insbesondere einer Verpackungs-Maschine (100),
und/oder
beim Ergreifen und aus der Bogen-Ebene (SB`) heraus bewegen
- der Zuschnitt (Z) kraftschlüssig, insbesondere mittels Saugkraft, an seiner Oberseite gehalten wird
und/oder
- der Rest des Stanz-Bogens (SB) um den Zuschnitt (Z) herum dabei automatisch in der Bogen-Ebene (SB`) gehalten wird.

16. Verfahren nach einem der vorhergehenden Verfahrensansprüche,
**dadurch gekennzeichnet, dass** vor dem Ergreifen und Herausheben des Zuschnitts (Z)
- entweder der Stanz-Bogen (SB) in eine vorgegebene Soll-Position in der horizontalen Ebene gebracht wird
- oder die Ist-Position des Zuschnitts (Z) oder des Stanz-Bogens (SB), insbesondere in der horizontalen Ebene, detektiert wird,
- mit einer Soll-Position verglichen wird und
- bei einer Abweichung über einem Toleranzwert die Abweichung dem Greifwerkzeug für den Zuschnitt (Z), insbesondere einem Trenn-Roboter mitgeteilt wird oder die Ist-Position in die Soll-Position verändert wird.

17. **Verfahren** zum Betreiben einer Verpackungsmaschine (100) einschließlich des Vereinzelns von Zuschnitten (Z) nach einem der vorhergehenden Verfahrensansprüche
**dadurch gekennzeichnet, dass**
- der Stapel (13) an Stanz-Bögen (S) zusammen mit dem Anlieferungs-Gebinde, insbesondere einer Palette (14), auf der der Stapel (13) steht, in die Vorrats-Station (3) eingestellt wird
und/oder
- außer dem Stapel (13) an Stanz-Bögen (SB) ein Vorrat an vereinzelten Zuschnitten (Z) vorgehalten wird zum Überbrücken von Stillstandszeiten des Zuschnitt-Vereinzelers (50).

## Claims

1. **Blank separator** (50) for separating flat blanks (Z), in particular made of cardboard material, for producing dimensionally stable outer packaging such as cardboard boxes (K), comprising
- a supply station (3) in which an, in particular vertical, stack (13) of, in particular planar, punched sheets (SB) is kept available, which each have a plurality of blanks (Z) that are located in one plane, adjoin one another, and are interconnected by means of predetermined tearing points (M), in particular micro-connections (M),
- a robot (1) for removing at least one blank of the uppermost punched sheet (SB) from the supply station (3),
- a controller (50*) for controlling at least all the movable parts of the blank separator (50),
**characterised in that**
- - the robot (1) is designed as a separating robot comprising a corresponding gripping tool (2), by means of which it can take hold of just one or a group of a plurality of blanks (Z), which are in particular still joined together, from the interconnected blanks (Z) of the punched sheet (SB) and separate it from the at least one adjacent blank (Z) of the rest of the uppermost punched sheet (SB) by lifting it from the stack and in the process tearing along the predetermined tearing points (M),
- at least one hold-down means (15) is provided to prevent the rest of the punched sheet (SB) from being lifted up when the blank (Z) taken hold of by the separating robot (1) is lifted up.

2. Blank separator according to claim 1,
**characterised in that**
- the gripping tool (2) in the form of a gripper comprises one or more upper-face grippers, in particular adhesion grippers or suction cups (4), which are in particular arranged in a horizontal gripping plane (4'),
- in particular when viewed in a plan view, the position of the suction cups (4) on the main tool body (2A) is adjustable,
- in particular is radially adjustable relative to its central region (2Az).

3. Blank separator according to claim 2,
**characterised in that**
- each upper-face gripper (4) is fastened to a radially extending suction-cup arm (5) and is either adjustable in its position along the suction-cup arm (5) or is arranged at the end of the suction-cup arm (5) and the suction-cup arm (5) is length-adjustable,
or
- each upper-face gripper (4) is adjustably fastened in or to a radial suction-cup guide formed on the main tool body (2A),
or
- the main tool body (2A) comprises a suction-cup support plate (6), comprising a plurality of fastening devices, which are in particular arranged radially and in the peripheral direction around the central region of the main body (2A), for upper-face grippers (4).

4. Blank separator according to any of claims 2 or 3,
**characterised in that**
- the robot (1) or the gripping tool (2) is designed such that, after activating the upper-face grippers (4), the suction-cup plane (4') can be adjusted into an inclined position relative to the horizontal (11, 12),
and/or
- the gripping tool (2) is designed such that the individual upper-face grippers (4) can be activated in a certain order, individually or in groups, in a controlled manner,
and/or
- the robot tool (2) is designed such that upper-face grippers (4) can be moved upwards out of the suction-cup plane (4') individually or in groups in a controlled manner,
- in particular such that, when activated, each upper-face gripper (4) is moved upwards out of the suction-cup plane (4') for this purpose either simultaneously or with a time delay.

5. Blank separator according to any of the preceding claims,
**characterised in that**
- the at least one hold-down means (15) is movably fastened to a base frame (3A) of the supply station (3),
- in particular is fastened to be movable in height, in particular in the vertical direction (10), and in the at least one of the two horizontal transverse directions (11, 12),
- hold-down-means bars (15.11, 15.12) extending in particular in a hold-down-means frame (9) in one or both horizontal transverse directions (11, 12) are each adjustable, in particular automatically adjustable in a controlled manner, in at least one, preferably both, transverse directions (11, 12),
and/or
in a plurality of hold-down means (15),
- either the lower faces of the hold-down means (15) are in a shared horizontal hold-down-means plane (15')
- or the hold-down means are designed such that they can adapt to an uneven, in particular sagging, upper face of the stack.

6. Blank separator according to any of the preceding claims,
**characterised in that**
- the at least one hold-down means (15) is fastened to the main tool body (2A) of the robot tool (2),
- in particular, a plurality of hold-down means (15) are arranged so as to be adjustable in their position relative to the main tool body (2A),
and/or,
when the blank separator is in accordance with any of claims 2 or 3,
- a hold-down means (15) is assigned to each upper-face gripper (4),
- in particular, a hold-down means (15) positioned radially further outwards relative to the main tool body (2A) is fastened to each upper-face gripper (4).

7. Blank separator according to any of the preceding claims,
**characterised in that**
- the supply station (3) comprises a mechanical supply aligner (16), which holds at least the uppermost punched sheet (SB), in particular the entire stack (13), in the target position, and/or brings it into said target position in the two horizontal directions (11, 12) by means of lateral stops (16a-d), in particular those that are adjustable, in particular adjustable in a controlled manner,
in particular the mechanical supply aligner (16) is arranged
- either on the supply base frame (3A)
- or on the hold-down-means frame (9)
- or on the main tool body (2A).

8. Blank separator according to any of the preceding claims,
**characterised in that**
- the supply station (3) or the separating robot (1) comprises a contactlessly operating position scanner (18) for the position of the uppermost punched sheet (SB) in the horizontal plane relative to the supply base frame,
- the separating robot is in a data connection with the position scanner, in particular via the controller, such that it can still take hold of the blank (Z) to be taken hold of in the same gripping position of the main tool body relative to the blank and/or
- a blank magazine (20), which is in particular open at the top or to the side, is in such a position that the separating robot (1) can place a blank (Z) it is holding therein.

9. Blank separator according to any of the preceding claims,
**characterised in that**
- a contactlessly operating checking scanner (19) is provided, which checks the separated blank (Z) for quality features, in particular its shape and/or size and/or quality of its outer edges and/or quality of its printing and/or design of its printing, in particular, the checking scanner (19)
- is either provided at a checking station that is separate from the supply station (3) and the blank magazine (20),
- which station is in particular arranged downstream of the supply station (3) and/or upstream of the blank magazine (20),
- or is arranged on the separating robot (1), in particular on the main tool body (2A).

10. Blank separator according to any of the preceding claims,
**characterised in that**
the supply station comprises a lifting device (17), which repositions the entire stack (13), in particular including the container (14) on which it is resting, in height according to the decreasing height of the stack (13), such that the uppermost blank (Z) is always approximately at the same height.

11. **Packaging machine** (100) for inserting and packaging products (P) in dimensionally stable outer packaging, in particular a cardboard box (K), comprising
- a cardboard box erector (60) for producing a cardboard box (K) from a flat blank (Z) made of cardboard material,
- - a plurality of transfer robots along a transfer section for transferring products (P) into cardboard boxes (K),
**characterised by**
- a blank separator (50) for separating individual blanks (Z) from a punched sheet (SB) comprising a plurality of blanks (Z) interconnected by means of predetermined tearing points (M), in particular micro-connections (M),
- the blank separator (50) in particular being designed according to any of the preceding claims.

12. Packaging machine according to claim 11,
**characterised in that**
- the packaging machine (100) comprises a transfer means, in particular a transfer robot, for transferring a single blank (Z) or a plurality of separated blanks from the blank magazine to the cardboard box erector (60) or a conveyor to the cardboard box erector (60),
- the transfer means (110) or the conveyor is designed as an aligner unit,
and/or
- the blank separator (50) of the separating robot (1) is positioned in the packaging machine (100) such that it can place a separated blank (Z) or a group of separated blanks that it is holding directly on the transport system (8) leading through the packaging machine (100) or can alternatively also place it in a blank magazine (20).

13. **Method** for producing separated blanks (Z)
- from a stack (13) of, in particular planar, punched sheets (SB) having a plurality of blanks (Z) that are located approximately in one plane and adjoin one another, and are interconnected by means of predetermined tearing points (M), in particular micro-connections (M),
- in particular by means of a blank separator (50) according to any of the preceding claims,
**characterised in that**
- a single blank (Z) or a plurality of blanks is automatically taken hold of from the uppermost or frontmost punched sheet (SB), which is in particular lying on the stack in this case, and is moved out of its sheet plane by tearing away the predetermined tearing points (M),
- in the process, the rest of the punched sheet (SB) is automatically held on the stack.

14. Method according to claim 13,
**characterised in that**
- before separating the blanks (Z), in particular before stacking the punched sheets (SB), the inner scraps and/or the outer scraps produced by punching the sheet (B), apart from the blanks (Z), in particular the punching scrap, of the punched sheet (SB) are removed from the punched sheet (SB),
and/or
- the blanks (Z), in particular before being separating out from the punched sheet (SB), are printed at least on one side in a ready-to-use manner.

15. Method according to any of the preceding method claims,
**characterised in that**
- the separated blank (Z) is checked for quality features, in particular shape and/or size and/or quality of the peripheral edges and/or quality of the printing and/or design of the printing,
- in particular before being placed in a blank magazine (20) or on the transport system (8) of the downstream machine, in particular a packaging machine (100),
and/or, when being taken hold of and moved out of the sheet plane (SB'),
- the blank (Z) is held on its upper face with a frictional fit, in particular by means of suction power,
and/or
- the rest of the punched sheet (SB) around the blank (Z) is automatically held in the sheet plane (SB') in the process.

16. Method according to any of the preceding method claims,
**characterised in that**
before taking hold of the blank (Z) and lifting it out,
- either the punched sheet (SB) is brought into a predetermined target position in the horizontal plane,
- or the actual position of the blank (Z) or the punched sheet (SB) is detected, in particular in the horizontal plane,
- is compared with a target position, and
- if there is a deviation above a tolerance value, the deviation is communicated to the gripping tool for the blank (Z), in particular a separating robot, or the actual position is modified to the target position.

17. **Method** for operating a packaging machine (100), including separating blanks (Z), according to any of the preceding method claims,
**characterised in that**
- the stack (13) of punched sheets (S) together with the delivery container, in particular a pallet (14) on which the stack (13) is standing, is positioned in the supply station (3),
and/or
- besides the stack (13) of punched sheets (SB), a supply of separated blanks (Z) is kept available in order to cover any downtime of the blank separator (50).

## Revendications

1. Séparateur de flans (50) pour individualiser des flans plats (Z), en particulier en matériau de carton, pour la fabrication de suremballages indéformables tels que des cartons (K), comportant
- une station d'alimentation (3) dans laquelle est stockée une pile (13), en particulier verticale, de feuilles découpées (SB), en particulier en forme de plaques, comportant chacune plusieurs flans (Z) situés dans un plan, se raccordant les uns aux autres et reliés entre eux par des points de déchirure (M), en particulier par des micro-liaisons (M),
- un robot (1) pour prélever dans la station d'alimentation (3) au moins un flan de la feuille découpée (SB) la plus haute,
- une commande (50*) pour commander au moins toutes les parties mobiles du séparateur de flans (50),
**caractérisé en ce que**
- le robot (1) est conçu comme un robot de séparation comprenant un outil de préhension (2) correspondant, avec lequel il est en mesure de saisir un seul ou un groupe de plusieurs flans (Z), en particulier encore attachés entre eux, parmi les flans (Z) reliés entre eux de la feuille découpée (SB) et de les séparer en les soulevant de la pile et en déchirant ainsi les points de déchirure (M) vis-à-vis d'au moins un flan voisin (Z) du reste de la feuille découpée (SB) la plus haute,
- il est prévu au moins un serre-flan (15) pour empêcher le soulèvement du reste de la feuille découpée (SB) lors du soulèvement du flan (Z) saisi par le robot de séparation (1).

2. Séparateur de flans selon la revendication 1,
**caractérisé en ce que**
- l'outil de préhension (2) comprend comme préhenseur un ou plusieurs préhenseurs de face supérieure, en particulier des préhenseurs d'adhérence ou des ventouses (4), disposés en particulier dans un plan de préhension horizontal (4'),
- la position des ventouses (4) sur le corps de base (2A) de l'outil est réglable, en particulier en vue de dessus,
- en particulier réglable radialement par rapport à sa zone centrale (2Az).

3. Séparateur de flans selon la revendication 2,
**caractérisé en ce que**
- chaque préhenseur de face supérieure (4) est fixé à un bras de ventouse (5) s'étendant radialement, et est soit réglable en position le long du bras de ventouse (5), soit disposé à l'extrémité du bras de ventouse (5), et le bras de ventouse (5) est réglable en longueur,
ou
- chaque préhenseur de face supérieure (4) est fixé de manière réglable dans ou sur un guide de ventouse radial réalisé sur le corps de base (2A) de l'outil,
ou
- le corps de base (2A) de l'outil comprend une plaque de support de ventouse (6) munie d'une pluralité de dispositifs de fixation pour les préhenseurs de face supérieure (4), disposés en particulier radialement et dans la direction périphérique autour de la zone centrale du corps de base (2A).

4. Séparateur de flans selon l'une des revendications 2 ou 3,
**caractérisé en ce que**
- le robot (1) ou l'outil de préhension (2) est conçu de telle sorte qu'après l'activation des préhenseurs de face supérieure (4), le plan de ventouse (4') peut être déplacé vers une position inclinée par rapport à l'horizontale (11, 12),
et/ou
- l'outil de préhension (2) est conçu de telle sorte que les différents préhenseurs de face supérieure (4) peuvent être activés de manière commandée dans un ordre chronologique déterminé, individuellement ou par groupes,
et/ou
- l'outil de robot (2) est conçu de telle sorte que les préhenseurs de face supérieure (4) peuvent être déplacés vers le haut hors du plan de ventouse (4') de manière commandée individuellement ou par groupes,
- en particulier de telle sorte que chaque préhenseur de face supérieure (4) soit déplacé vers le haut hors du plan de ventouse (4') lors de l'activation, en même temps ou avec un décalage dans le temps.

5. Séparateur de flans selon l'une des revendications précédentes, **caractérisé en ce que**
- ledit au moins un serre-flan (15) est fixé de manière mobile sur un bâti de base (3A) de la station d'alimentation (3),
- en particulier est fixé de manière mobile en hauteur, en particulier dans la verticale (10), ainsi que dans l'une au moins des deux directions transversales horizontales (11, 12),
- en particulier dans un cadre de serre-flan (9), des barres de serre-flan (15.11, 15.12) s'étendant dans l'une ou dans les deux directions transversales horizontales (11, 12) sont réglables dans l'une au moins, de préférence dans les deux directions transversales (11, 12), en particulier réglables automatiquement par une commande,
et/ou
dans le cas de plusieurs serre-flans (15)
- soit les faces inférieures des serre-flans (15) sont situées dans un même plan horizontal de serre-flan (15'),
- soit les serre-flans sont conçus de manière à pouvoir s'adapter à une face supérieure de la pile qui n'est pas plane, en particulier qui s'affaisse.

6. Séparateur de flans selon l'une des revendications précédentes, **caractérisé en ce que**
- ledit au moins un serre-flan (15) est fixé au corps de base (2A) de l'outil de robot (2),
- en particulier plusieurs serre-flans (15) et/ou leurs positions par rapport au corps de base (2A) de l'outil sont réglables,
et/ou, au cas où le séparateur de flans est réalisé selon l'une des revendications 2 ou 3,
- un serre-flan (15) est associé à chaque préhenseur de face supérieure (4),
- en particulier, un serre-flan (15) positionné radialement plus à l'extérieur par rapport au corps de base (2A) de l'outil est fixé à chaque préhenseur de face supérieure (4).

7. Séparateur de flans selon l'une des revendications précédentes,
**caractérisé en ce que**
- la station d'alimentation (3) comprend un dispositif d'alignement (16) mécanique qui maintient et/ou amène au moins la feuille découpée (SB) la plus haute, en particulier toute la pile (13), dans la position de consigne dans les deux directions horizontales (11, 12) au moyen de butées latérales (16a - d), en particulier réglables, en particulier réglables par commande,
en particulier, le dispositif d'alignement (16) mécanique est agencé
- soit sur le bâti de base (3A),
- soit sur le cadre serre-flan (9),
- soit sur le corps de base (2A) de l'outil.

8. Séparateur de flans selon l'une des revendications précédentes,
**caractérisé en ce que**
- la station d'alimentation (3) ou le robot de séparation (1) comprend un scanner de position (18) fonctionnant sans contact physique pour la position de la feuille découpée (SB) la plus haute dans le plan horizontal par rapport au bâti de base,
- le robot de séparation est relié au scanner de position par voie informatique, en particulier par l'intermédiaire de la commande, de sorte qu'il peut néanmoins saisir le flan (Z) à saisir dans la même position de saisie du corps de base de l'outil par rapport au flan,
et/ou
- un magasin de flans (20), en particulier ouvert vers le haut ou sur le côté, est présent dans une position telle que le robot de séparation (1) peut y déposer un flan (Z) qu'il tient.

9. Séparateur de flans selon l'une des revendications précédentes, **caractérisé en ce que**
- il est prévu un scanner de contrôle (19) fonctionnant sans contact physique, qui contrôle le flan (Z) individualisé quant à des caractéristiques de qualité, en particulier quant à sa forme et/ou à sa taille et/ou à la qualité de ses bords extérieurs et/ou à la qualité de son impression et/ou du motif de son impression,
en particulier, le scanner de contrôle (19) est disposé
- soit sur une station de contrôle distincte de la station d'alimentation (3) et du magasin de flans (20),
- soit en particulier en aval de la station d'alimentation (3) et/ou en amont du magasin de flans (20),
- soit sur le robot de séparation (1), en particulier sur le corps de base (2A) de l'outil.

10. Séparateur de flans selon l'une des revendications précédentes, **caractérisé en ce que** la station d'alimentation comprend un dispositif de levage (17) pour faire suivre l'ensemble de la pile (13), en particulier y compris le support (14) sur lequel elle repose, selon la hauteur en fonction de la hauteur décroissante de la pile (13), de sorte que le flan (Z) le plus haut se trouve toujours sensiblement à la même hauteur.

11. Machine d'emballage (100) pour insérer et emballer des produits (P) dans un suremballage indéformable, en particulier dans un carton (K), comprenant
- un redresseur de carton (60) pour la fabrication d'un carton (K) à partir d'un flan plat (Z) constitué en matériau de carton,
- plusieurs robots de transfert le long d'un trajet de transfert pour transférer des produits (P) jusque dans des cartons (K),
**caractérisée par**
- un séparateur de flans (50) pour individualiser des flans individuels (Z) d'une feuille découpée (SB) comprenant plusieurs flans (Z) reliés entre eux par des points de déchirure (M), en particulier par des micro-liaisons (M),
- le séparateur de flans (50) étant en particulier réalisé selon l'une des revendications précédentes.

12. Machine d'emballage selon la revendication 11,
**caractérisée en ce que**
- la machine d'emballage (100) comprend un dispositif de transfert, en particulier un robot de transfert, pour transférer un seul ou plusieurs flans individualisés (Z) depuis le magasin de flans vers le redresseur de carton (60), ou un convoyeur d'alimentation vers le redresseur de carton (60),
- le dispositif de transfert (110) ou le convoyeur d'alimentation est conçu comme une unité d'alignement,
et/ou
- le séparateur de flans (50) et/ou le robot de séparation (1) est positionné dans la machine d'emballage (100) de manière à pouvoir déposer un flan individualisé ou un groupe de flans individualisés (Z) qu'il tient directement sur le système de transport (8) qui traverse la machine d'emballage (100), ou, au choix, le déposer dans un magasin de flans (20).

13. Procédé de production de flans individualisés (Z)
- à partir d'une pile (13) de feuilles découpées (SB), en particulier en forme de plaques, comprenant plusieurs flans (Z) situés à peu près dans un plan et se raccordant les uns aux autres, reliés entre eux par des points de déchirure (M), en particulier par des micro-liaisons (M),
- en particulier au moyen d'un séparateur de flans (50) selon l'une des revendications précédentes,
**caractérisé en ce que**
- un seul ou plusieurs flans (Z) sont saisis automatiquement dans la feuille découpée (SB) la plus haute ou la plus en avant, reposant en particulier sur la pile, et sont déplacés hors du plan de la feuille en déchirant les points de déchirure (M),
- le reste de la feuille découpée (SB) étant maintenu automatiquement sur la pile.

14. Procédé selon la revendication 13,
**caractérisé en ce que**
- avant d'individualiser les flans (Z), en particulier avant d'empiler les feuilles découpées (SB), les déchets intérieurs et/ou les déchets extérieurs générés à l'écart des flans (Z) par le découpage de la feuille (B), en particulier le grillage de découpage de la feuille découpée (SB), sont enlevés.
et/ou
- les flans (Z) sont imprimés au moins sur un côté, prêts à l'emploi, en particulier avant d'être séparés de la feuille découpée (SB).

15. Procédé selon l'une des revendications précédentes relatives au procédé,
**caractérisé en ce que**
- le flan individualisé (Z) est contrôlé quant aux caractéristiques de qualité, en particulier quant à sa forme et/ou à sa taille et/ou à la qualité des bords périphériques et/ou à la qualité de l'impression et/ou du motif de l'impression,
- en particulier avant d'être déposé dans un magasin de flans (20) ou sur le système de transport (8) de la machine située en aval, en particulier d'une machine d'emballage (100),
et/ou
lors de la saisie et du déplacement hors du plan de la feuille (SB'),
- le flan (Z) est maintenu par adhérence sur sa face supérieure, en particulier au moyen d'une force d'aspiration,
et/ou
- le reste de la feuille découpée (SB) autour du flan (Z) est automatiquement maintenu dans le plan de la feuille (SB').

16. Procédé selon l'une des revendications précédentes relatives au procédé,
**caractérisé en ce que**
avant de saisir et de soulever le flan (Z),
- soit la feuille découpée (SB) est amenée dans une position de consigne prédéfinie dans le plan horizontal,
- soit la position réelle du flan (Z) ou de la feuille découpée (SB), en particulier dans le plan horizontal, est détectée,
- est comparée à une position de consigne et
- en cas d'écart supérieur à une valeur de tolérance, l'écart est communiqué à l'outil de préhension du flan (Z), en particulier à un robot de séparation, ou la position réelle est modifiée pour devenir la position de consigne.

17. Procédé d'exploitation d'une machine d'emballage (100), y compris l'individualisation de flans (Z), selon l'une des revendications précédentes relatives au procédé,
**caractérisé en ce que**
- la pile (13) de feuilles découpées (S) est placée dans la station d'alimentation (3), conjointement avec le support de livraison, en particulier une palette (14) sur laquelle se trouve la pile (13),
et/ou
- en plus de la pile (13) de feuilles découpées (SB), une réserve de flans individualisés (Z) est stockée pour couvrir les temps d'arrêt du séparateur de flans (50).
